# EUROPEAN PATENT APPLICATION

(11) **EP 4 775 345 A2**
(43) Date of publication of application: **15.07.2026**
(21) Application number: 26178888.9
(22) Date of filing: 29.06.2023
(51) Int. Cl.: B23K 26/064

(54) **APPARATUS FOR LASER PROCESSING A MATERIAL**

(30) Priority: 29.06.2022 GB 202209530; 08.06.2023 GB 202308567
(62) Divisional of application: 23738846.7
(71) Applicant: Trumpf Laser UK Limited, Southampton, Hampshire SO30 2QU (GB)
(72) Inventor: BOTHEROYD, Iain, Rugby, CV22 5HR (GB); RONGSHENG, Chen, Faringdon, SN7 7FY (GB); DURKIN, Michael Kevan, Southampton, SO18 1GF (GB); GHIRINGHELLI, Fabio, Southampton, SO32 1RJ (GB); HERDZIK, Krysztof Pawel, Rugby, CV21 1BF (GB); MALINOWSKI, Andrew, Southampton, SO17 1AF (GB)
(74) Representative: Dolleymores

(57) **Abstract**

Apparatus for laser processing a material (29), which apparatus comprises at least one first laser (15), at least one second laser (16), an optical combiner (3), and a multicore fibre (10), wherein: each first laser (15) is connected to the optical combiner (3) via a first feed fibre (1); each second laser (16) is connected to the optical combiner (3) via a second feed fibre (2); the optical combiner (3) connects the first feed fibre (1) to a first core (11) of the multicore fibre (10), and the second feed fibre (2) to a second core (12) of the multicore fibre (10); the optical combiner (3) provides a first optical path (41) from the first laser (15) to the first core (11) of the multicore fibre (10); the optical combiner (3) provides a second optical path (42) from the second laser (16) to the second core (12) of the multicore fibre (10); and the optical combiner (3) comprises a fibre bundle (4) that is tapered along its length.

## Description

### Field of Invention

This invention relates to an apparatus for laser processing a material.

### Background to the Invention

Lasers are used extensively for cutting and welding industrial materials. Different processes and applications have different requirements for laser beam parameters such as focal diameter, intensity distribution or beam quality at the processing point. Laser processing equipment is commercially available in which an output laser beam can be switched between different laser beam parameters, for example from a comparatively good beam quality with a sharp focus as is required for a laser cutting process, and a lesser beam quality with a less sharp focus and a uniform intensity distribution in the beam cross-section, for example for welding and thick section cutting processes.

It would be desirable if such laser processing equipment had more power available at optimal beam qualities for laser cutting and other laser material processes. Such laser processing equipment would enable faster cutting speeds, which would reduce manufacturing costs and would therefore be commercially advantageous.

The present invention arose in an attempt to provide an apparatus for laser processing a material that solves the aforementioned problem.

### The Invention

According to a non-limiting embodiment of the present invention there is provided apparatus for laser processing a material, which apparatus comprises at least one first laser, at least one second laser, an optical combiner, and a multicore fibre, wherein:
- each first laser is connected to the optical combiner via a first feed fibre;
- each second laser is connected to the optical combiner via a second feed fibre;
- the optical combiner connects the first feed fibre to a first core of the multicore fibre, and the second feed fibre to a second core of the multicore fibre;
- the optical combiner provides a first optical path from the first laser to the first core of the multicore fibre;
- the optical combiner provides a second optical path from the second laser to the second core of the multicore fibre; and
- the optical combiner comprises a fibre bundle that is tapered along its length.

The fibre bundle may comprise at least one spacing fibre, wherein the or a first feed fibre is separated from the or a second feed fibre by the or a spacing fibre. This bundle geometry is beneficial in that it enables the production of separate / non-adjacent first and second feed fibres without the need to introduce an inner capillary to the bundle assembly. Thus the bundle geometry can have a better match to the geometry of the multicore fibre. It can therefore improve the transmission efficiency of the combiner, without the additional cost and complexity associated with the use of an inner capillary that separates the first feed fibre from the second feed fibre.

The first feed fibre, the second feed fibre and the spacing fibre may be arranged in a formation, and the first feed fibre may be offset from the centre of the formation. The formation may be a square or a triangular or a hexagonal formation. Other formations are also possible.

The fibre bundle may comprise two first feed fibres, two second feed fibres, and three spacing fibres, and the first feed fibres, the second feed fibres and the spacing fibres may be arranged in a hexagonal formation. One of the spacing fibres may be at the centre of the hexagon.

The fibre bundle may comprise at least one first feed fibre, at least two second feed fibres, and at least three spacing fibres arranged in a formation. One of the spacing fibres may be at the centre of the formation. This formation enables the first feed fibre or fibres to be coupled to the first core of the multicore fibre, and the second feed fibres to be coupled to the second core of the multicore fibre. Two, three, four or more second feed fibres can be provided in this arrangement enabling the optical power emitted by the apparatus to be scaled. The central spacing fibre may have a larger diameter than the other fibres in the formation.

The fibre bundle may comprise one first feed fibre, three second feed fibres, and two spacing fibres. The feed fibre, the second feed fibres and the spacing fibres may be arranged in a hexagonal formation. Additional second feed fibres may be provided. One of the spacing fibres may be at the centre of the formation. This bundle geometry is beneficial because it enables a fundamental LP_{0,1} optical mode to be coupled from the first feed fibre to the first core of the multicore fibre and then directed at the material being processed. Mode converters applied to either the first feed fibre and/or the output fibre can convert the fundamental mode to higher order modes in dependence on the laser processing that is being performed on the material.

The first feed fibre and the second feed fibre may be arranged in a square formation which comprises the first feed fibre, the second feed fibre and two spacing fibres. The first feed fibre and the second feed fibre may be diagonally opposite each other.

The fibre bundle may comprise a plurality of the second feed fibres and a plurality of spacing fibres. The first feed fibre, the second feed fibres and the spacing fibres may be arranged in a hexagonal formation. The first feed fibre may be disposed in the centre of the hexagonal formation. This bundle geometry also enables the production of separate / non-adjacent first and second feed fibres without the need to introduce an inner capillary to the bundle assembly. The bundle geometry when four second feed fibres are provided allows up to four second lasers to be connected to the fibre bundle which provides power scaling for different production processes dependent on how many lasers are required. Additional second feed fibres may be incorporated into the bundle around the central hexagonal formation thus enabling additional second lasers to be connected to the fibre bundle and hence additional power scaling.

The fibre bundle may comprise a plurality of the first feed fibres. A plurality of the first feed fibres enables power scaling of the laser beam emitted from the first core of the multicore fibre by adding additional first lasers dependent on the power that is required from the first core of the multicore fibre.

The fibre bundle may comprise a low index ring adjacent to a cladding of the first feed fibre, wherein the low index ring has a refractive index less than a refractive index of the cladding. The low index ring may be a cladding of the first feed fibre that surrounds the cladding.

The fibre bundle may comprise an inner capillary. The inner capillary may comprise at least one groove. The groove is advantageous as it aids assembly of the fibre bundle.

The fibre bundle may comprise the first feed fibre and at least one of the second feed fibres. The first feed fibre and the second feed fibre may be located in a capillary. The first feed fibre may be adjacent to a wall of a bore of the capillary. This arrangement may simplify construction of the fibre bundle, and may be particularly useful for products having two to five second lasers. The bore may be offset from a central axis of the capillary such that the first feed fibre is aligned to the central axis of the capillary.

The fibre bundle may comprise an outer capillary surrounding the at least one second feed fibre. The outer capillary may be a square capillary. The outer capillary may be of other configurations. A square capillary is advantageous for packing the first and second feed fibres when arranged in a square formation without an inner capillary. Spacing fibres can be included to space adjacent first and second feed fibres apart.

The first laser may comprise a single mode laser. A single mode laser has a higher beam quality than a multimode laser at the same wavelength, and therefore enables the laser radiation emitted from the first core of the multicore fibre to be optimised. The first laser may comprise a multimode laser.

The first feed fibre may be a multimode fibre, the first laser may comprise an output fibre, and the output fibre and the first feed fibre may be fusion spliced together with a splice such that a fundamental mode propagating in the output fibre is coupled to a fundamental mode propagating in the first feed fibre. The output fibre and/or the first feed fibre may be tapered at or near the splice in order to match the profiles of the two fundamental modes and thereby reduce splice losses and coupling to higher order modes.

The first feed fibre may be tapered such that a core diameter of the first feed fibre at an output of the optical combiner is less than a critical diameter at which a mode field diameter of a fundamental mode of the first feed fibre reaches a minimum mode field diameter in the optical combiner. Preferably, the taper is adiabatic in order to reduce coupling from the fundamental mode to higher order modes of the first feed fibre.

The first feed fibre may be a double clad fibre. A double clad fibre may have an outer cladding that has a lower refractive index than an inner cladding. This enables optical radiation that is coupled from a core of the first feed fibre into its inner cladding to be guided by the inner cladding by total internal reflection.

The second laser may comprise a single mode laser.

The second feed fibre may be a multimode fibre, the second laser may comprise an output fibre, and the output fibre and the second feed fibre may be fusion spliced together with a splice such that a fundamental mode propagating in the output fibre is coupled to a fundamental mode propagating in the second feed fibre. The output fibre and/or the second feed fibre may be tapered at or near the splice in order to match the profiles of the two fundamental modes and thereby reduce splice losses and reduce coupling to higher order modes at the splice.

The second feed fibre may be tapered such that a core diameter of the second feed fibre at an output of the optical combiner is less than a critical diameter at which a mode field diameter of a fundamental mode of the second feed fibre reaches a minimum mode field diameter. Preferably, the taper is adiabatic in order to reduce coupling from the fundamental mode to higher order modes of the second feed fibre.

The second feed fibre may be tapered such that a core diameter of the second feed fibre at an output of the optical combiner is greater than a critical diameter at which a mode field diameter of a fundamental mode of the second feed fibre reaches a minimum mode field diameter. Preferably, the taper is adiabatic in order to reduce coupling from the fundamental mode to higher order modes of the second feed fibre.

The second feed fibre may be a double clad fibre. A double clad fibre has an outer cladding that has a lower refractive index than an inner cladding. This enables optical radiation that is coupled from a core of the second feed fibre into its inner cladding to be guided by the inner cladding by total internal reflection.

The apparatus may include a cladding mode stripper on the first feed fibre and the second feed fibre. The cladding mode stripper may remove unwanted cladding modes from the first or second feed fibres and thereby reduce the likelihood of optical damage of optical components and coatings caused by stray light.

The apparatus may include a cladding mode stripper on the multicore fibre. The cladding mode stripper may remove unwanted cladding modes from the multicore fibre and thereby reduce the likelihood of other equipment, or the material being processed, being damaged by stray light.

The fibre bundle may have an input face at its larger diameter end which has an angle θ with respect to its longitudinal axis. The angle θ may be between 35 and 55 degrees. This ensures that optical radiation reflected back along the fibre bundle is reflected out of the fibre bundle by total internal reflection. The angle θ is preferably 45 degrees.

The apparatus may include a collimator at a distal end of the multicore fibre, and wherein the collimator is connected to a laser processing head that comprises a focussing lens. The collimator and focussing lens may image the distal end of the multicore fibre onto the material to be processed.

The apparatus may include a control unit connected to the first laser and to the second laser to control a power of laser radiation emitted by the first laser and the second laser, and thereby independently control a power of laser radiation propagating along the first optical path to the first core of the multicore fibre, and a power of laser radiation propagating along the second optical path to the second core of the multicore fibre.

The control unit may be connected to a mode converter to control the beam quality of the laser radiation propagating along the first or second optical path and thereby control the beam quality of laser radiation emitted from the multicore fibre.

At least one of the first lasers and/or at least one of the second lasers may be connected to a mode converter. The mode converter may convert a fundamental mode emitted by the first and/or second laser into at least one higher order mode, which may propagate through the fibre bundle to the multicore fibre. This enables the beam quality of the laser radiation emitted by the multicore fibre to be adjusted before or during the laser processing of the material.

The mode converter may be such that an LP_{0,1} mode guided by the first feed fibre is coupled to one or more LPₚ,₁ optical modes of the first feed fibre.

The apparatus may comprise a mode converter which acts on the multicore fibre.

The first core of the multicore fibre may be such that it can guide an LPₚ,₁ mode thereby allowing the modal content of a first beam (31) emitted by the first core (11) to be selected in dependence on the laser processing that is being performed on the material.

The mode converter may be such that an LP_{0,1} mode guided by the second feed fibre is coupled to one or more LPₚ,₁ optical modes of the second feed fibre.

The taper ratio of the fibre bundle may be such that the LPₚ,₁ mode is not guided by the second feed fibre at a minimum taper diameter of the fibre bundle. The minimum taper diameter may be located before the splice between the fibre bundle and the output fibre. This enables the numerical aperture or divergence angle of modes or rays launched by the LPₚ,₁ mode to be reduced before coupling into the multicore fibre.

The multicore fibre may have a taper to interface to the fibre bundle. This enables the fibre bundle to be interfaced to different beam delivery cables having different core diameters.

The control unit may enable an improvement in productivity in cutting, welding and additive manufacturing applications by enabling automatic adjustment of the power and beam quality emitted from the first core, second core and a glass body of the multicore fibre while processing the material. The adjustment can be programmed dependent on the process being performed and can be adjusted both before and during the process, for example to take into account changes in material thicknesses.

The apparatus may include an optical analyser connected to an input of the optical combiner. The optical analyser may enable optical radiation that is reflected or emitted from the material to be analysed in order to control the laser processing of the material. The optical analyser can be used to detect when a material has been pierced, to monitor cutting speeds during thin, thick and variable thickness cutting, to monitor welding and brazing quality, and to monitor the quality of sintered layers of metal powders in additive manufacturing applications. The optical analyser may provide an output into the control unit. The control unit may use information supplied by the optical analyser to control at least one of the first laser or lasers, the second laser or lasers, the optical switch (if provided), and at least one of the mode converters (if provided).

The apparatus may comprise a plurality of the second feed fibres. The apparatus may include an optical switch having an input connected to the at least one first laser, a first output for the first feed fibre, and a second output for at least one of the second feed fibres, thus enabling first laser radiation emitted by the at least one first laser to be coupled into either or both the first feed fibre and the said at least one second feed fibre. The optical switch may be between the at least one first laser and the optical combiner.

The apparatus of the invention can be used to form the first image by turning the at least one first laser on. The first image can be modified using the mode converter acting on the first laser radiation and/or the mode converter acting on the multicore fibre to increase the beam parameter product of the first beam.

The first image can be modified using the mode converter acting on the first laser radiation and/or the mode converter acting on the multicore fibre to convert the first beam with predominantly a LP_{0,1} mode content to a beam with predominantly a LPₚ,₁ mode content, where p is an integer.

The first beam is particularly useful for piercing metal and for micromachining.

The apparatus of the invention can be used to form the second image by turning the at least one second laser on. The second image can be modified using the mode converter acting on the second laser radiation and/or the mode converter acting on the multicore fibre to increase the beam parameter product of the second beam and/or to homogenize the second image. The second image can be increased in intensity by coupling the first laser radiation to the second feed fibre using the optical switch.

The second beam is particularly useful for cutting and welding.

The apparatus of the invention can be used to form the third image by turning the first laser and/or the second laser on, and operating at least one of the mode converters to couple the first and/or second feed fibres to unguided optical modes of the first and second feed fibres when tapered in the tapered fibre beam combiner. The third image can be modified using the mode converter acting on the first or the second laser radiation and/or the mode converter acting on the multicore fibre to increase the beam parameter product of the third beam and/or to homogenize the third image.

The apparatus of the present invention may be produced by a method comprising providing apparatus for laser processing a material, which apparatus comprises at least one first laser, at least one second laser, an optical combiner, and a multicore fibre, wherein:
- each first laser is connected to the optical combiner via a first feed fibre;
- each second laser is connected to the optical combiner via a second feed fibre;
- the optical combiner connects the first feed fibre to a first core of the multicore fibre, and the second feed fibre to a second core of the multicore fibre;
- the optical combiner provides a first optical path from the first laser to the first core of the multicore fibre;
- the optical combiner provides a second optical path from the second laser to the second core of the multicore fibre; and
- the optical combiner comprises a fibre bundle that is tapered along its length;
and controlling the power and beam quality of at least one of a first beam, a second beam and a third beam emitted from the multicore fibre in dependence of the laser processing to be performed on the material.

The method may be such that it comprises one or more method steps for providing the above mentioned optional component parts of the apparatus.

A method of using the apparatus of the invention may be to provide the apparatus of the invention and to switch between a first image, a second image and a third image in dependence of the laser processing to be performed on the material.

In a further aspect, the invention provides a method of laser processing a material, or of tailoring a beam profile during material processing, using a method or apparatus as described.

### Brief Description of the Drawings

Embodiments of the invention will now be described solely by way of example and with reference to the accompanying drawings in which:
Figure 1 shows an apparatus according to the present invention;
Figure 2 shows a cross section of a fibre bundle having four first feed fibres arranged in a square packed formation within an inner capillary, and fifteen second feed fibres arranged in a ring around the inner capillary and within an outer capillary;
Figure 3 shows a multicore fibre having a first core and a second core;
Figure 4 shows the overlap of the first and second feed fibres of Figure 2 with the first and second cores of the multicore fibre of Figure 3;
Figure 5 shows a fibre bundle in which the inner capillary has grooves to assist in the assembly of the second feed fibres into the bundle;
Figure 6 shows a fibre bundle having three first feed fibres arranged in a hexagonal close packed formation;
Figure 7 shows a fibre bundle having seven first feed fibres arranged in a hexagonal close packed formation surrounded by an inner capillary and a ring of second feed fibres;
Figure 8 shows a multicore fibre having a first core, an inner ring core, and an outer ring core;
Figure 9 shows the overlap of the first and second feed fibres of Figure 7 with the first core, the inner ring core, and the outer ring core of the multicore fibre of Figure 8;
Figure 10 shows a fibre bundle comprising a single first feed fibre and six second feed fibres arranged in a hexagonal closed packed formation;
Figure 11 shows the overlap of the first and second feed fibres of Figure 10 with the first and second cores of the multicore fibre of Figure 3;
Figure 12 shows the overlap of the first and second feed fibres of Figure 10 with the first and second cores of the multicore fibre of Figure 3 in which the size of the second core has been reduced and the second feed fibres are aligned to a circle within the annulus of the second core;
Figure 13 shows a fibre bundle including a low index ring for avoiding coupling into the inner cladding of multicore fibres;
Figure 14 shows a fibre bundle comprising four fibres arranged in a square-packed geometry, wherein the first feed fibre and a second feed fibre are diagonally disposed with respect to each other, thus avoiding the use of the low index ring of Figure 13;
Figure 15 shows the overlap of the first and second feed fibres of Figure 14 with the first and second cores of the multicore fibre of Figure 3;
Figure 16 shows a fibre bundle comprising one central first feed fibre and six second feed fibres arranged in a square-packed geometry within a square capillary;
Figure 17 shows the overlap of the first and second feed fibres of Figure 16 with the first and second cores of the multicore fibre of Figure 3;
Figure 18 shows a fibre bundle comprising a first feed fibre and two second feed fibres arranged side by side;
Figure 19 shows the overlap of the first and second feed fibres of Figure 18 with the first and second cores of the multicore fibre of Figure 3;
Figure 20 shows the fibre bundle of Figure 18 but with an offset bore;
Figure 21 shows the fibre bundle of Figure 20 but with grooves in the bore of the capillary;
Figure 22 shows a fibre bundle comprising a capillary having a first and a second bore, wherein the first feed fibres are arranged in the first bore, and the second feed fibres are arranged in the second bore;
Figure 23 shows the overlap of the first and second feed fibres of Figure 22 with a multicore fibre having a first core aligned to the first bore, and a second core aligned to the second bore;
Figure 24 shows how the mode field diameter of the fundamental mode of a typical first or second feed fibre decreases with decreasing core diameter until it reaches a minimum mode field diameter at a critical diameter;
Figure 25 shows an apparatus comprising a fibre bundle that is tapered along its length comprising two first feed fibres and two second feed fibres separated by three spacing fibres;
Figure 26 shows a fibre bundle comprising one first feed fibre and three second feed fibres separated by three spacing fibres;
Figure 27 shows a squeezing mechanism comprising two periodic surfaces;
Figure 28 shows a squeezing mechanism that can deform an optical fibre into a helix;
Figure 29 shows an individual part of the squeezing mechanism of Figure 28;
Figure 30 shows the fundamental LP_{0,1} mode of the first core of a multicore fibre; and
Figures 31 - 35 show individual higher-order modes of the first core of the multicore fibre .

### Detailed Description of Preferred Embodiments of the Invention

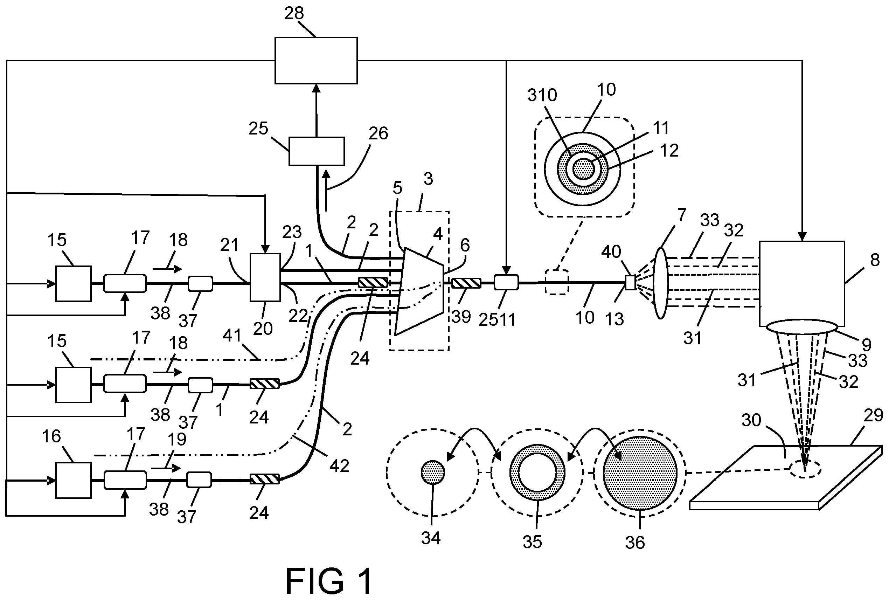

Figure 1 shows an apparatus for laser processing a material 29, which apparatus comprises at least one first laser 15, at least one second laser 16, an optical combiner 3, and a multicore fibre 10, wherein:
- each first laser 15 is connected to the optical combiner 3 via a first feed fibre 1;
- each second laser 16 is connected to the optical combiner 3 via a second feed fibre 2;
- the optical combiner 3 connects the first feed fibre 1 to a first core 11 of the multicore fibre 10, and the second feed fibre 2 to a second core 12 of the multicore fibre 10;
- the optical combiner 3 provides a first optical path 41 from the first laser 15 to the first core 11 of the multicore fibre 10;
- the optical combiner 3 provides a second optical path 42 from the second laser 16 to the second core 12 of the multicore fibre 10; and
- the optical combiner 3 comprises a fibre bundle 4 that is tapered along its length.

The apparatus may include an optical switch 20 between the optical combiner 3 and at least one of the first lasers 15. The optical switch 20 has an input 21 connected to the first laser 15, a first output 22 connected to one of the first feed fibres 1, and a second output 23 connected to one of the second feed fibres 2, thus enabling first laser radiation 18 emitted by the first laser 15 to be coupled into either or both the first feed fibre 1 and the second feed fibre 2. The optical switch 20 may comprise free space optical components such as lenses, mirrors, prisms and wedges that direct the first laser radiation 18 to the first feed fibre 1 and/or to the second feed fibre 2. Alternatively, the optical switch 20 may be based on a mechanism that bends an optical fibre, and thus redirects the first laser radiation 18 propagating along the optical fibre to the first feed fibre 1 or the second feed fibre 2.

The optical combiner 3 may comprise free space optical components such as lenses, mirrors, prisms and wedges. Free space combiners which can control and direct input laser beams to the first core 11 and the second core 12 are described in US Patent No. US 11,215,761 which patent is hereby incorporated herein by reference.

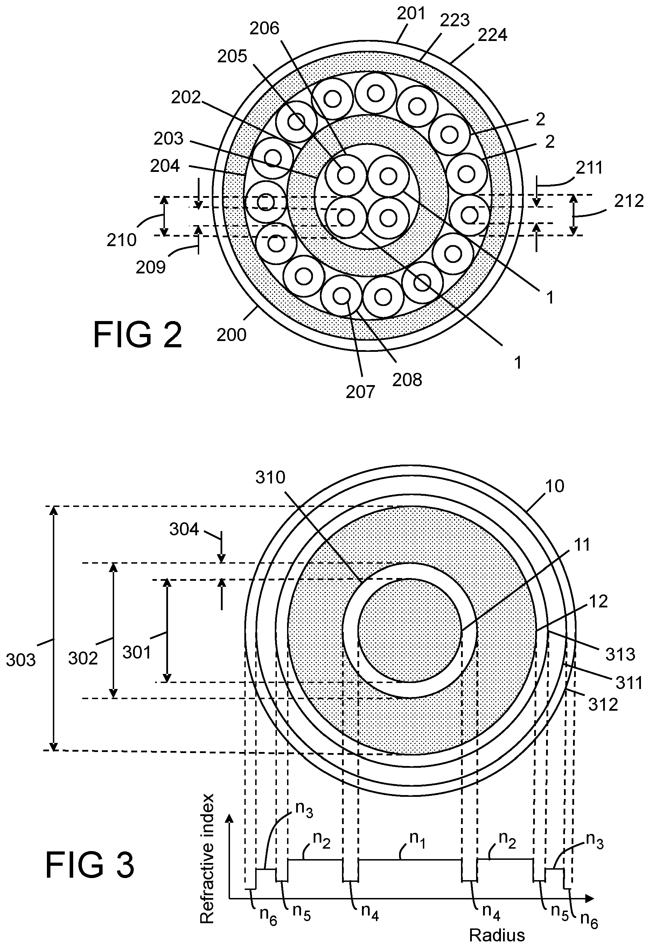

The fibre bundle 4 that is tapered along its length can be the fibre bundles 200, 60, 70, 100, 130, 140, 160, 180, 2000, 220, or 251 which will now be described with reference to Figures 2, 6, 7, 10, 13, 14, 16, 18, 20, 22 and 25 respectively. The first and second feed fibres 1, 2 can be individually tapered and then assembled into the fibre bundle. Alternatively, the first and second feed fibres 1, 2 can be assembled into a bundle, and the whole bundle tapered collectively to form the tapered input fibre bundle 4.

Figure 2 shows a cross section of a fibre bundle 200 at or near its input 5 shown with reference to Figure 1. The fibre bundle 200 is tapered along its length. The fibre bundle 200 has more than one first feed fibre 1 and more than one second feed fibre 2. The first feed fibre 1 has a core 205 and a cladding 206. The second feed fibre 2 has a core 207 and a cladding 208. The fibre bundle 200 comprises an outer capillary 201 and an inner capillary 202. The inner and outer capillaries 201, 202 are made from glass. The glass is preferably silica or a borosilicate glass. More preferably the glass is fluorine-doped silica, which is also known as fluorosilicate. Fluorine-doped silica has a lower refractive index than silica. Silica is the preferred material for the claddings 206, 208 of the first and second feed fibres 1, 2, and thus the fluorine-doped silica helps guide optical radiation that may leak from the cores 205, 207 of the first and second feed fibres 1, 2 into their respective claddings 206, 208. Four first feed fibres 1 are located within a bore 203 of the inner capillary 202. Fifteen second feed fibres 2 are located within a bore 204 of the outer capillary 201. As shown in Figure 2, the four first feed fibres 1 are arranged in a square formation that is referred to as a square close-packed formation. The second feed fibres 2 are arranged in a circular ring surrounding the first feed fibres 1. Other arrangements are also possible.

The outer capillary 201 may comprise a glass body 223 surrounded by an optional glass cladding 224. The optional glass cladding 224 may have a refractive index less than a refractive index of the glass body 223 in order to guide optical radiation coupled into the glass body 223. The difference in the refractive indices of the glass body 223 and the glass cladding 224 is preferably sufficient to guide optical modes that may be coupled out of the first and the second feed fibres 1, 2 as the optical modes propagate along the fibre bundle 4. The guidance is by total internal reflection.

The fibre bundle 200 is assembled, tapered, cleaved, and coupled to the multicore fibre 10 shown in Figure 3. The first and second feed fibres 1, 2 can be individually tapered and then assembled. Alternatively, the first and second feed fibres 1, 2 can be assembled into a bundle, and the whole bundle tapered collectively.

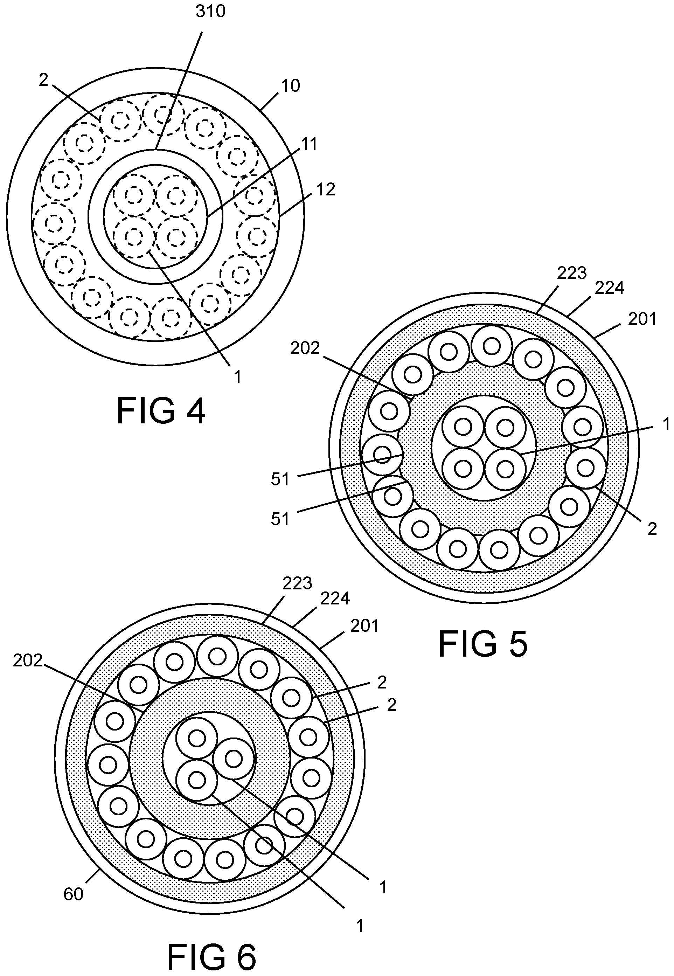

The multicore fibre 10 has a first core 11 and a second core 12, separated by an inner cladding 310. The inner cladding 310 is made from a glass that has a lower refractive index n₄ than the refractive index n₁ of the first core 11 and the refractive index n₂ of the second core 12. The inner cladding 310 may be made from silica, borosilicate or fluorine-doped silica. The first core 11 has a diameter 301, and the second core 12 has an inner diameter 302 and an outer diameter 303. The tapering is such that the first feed fibres 1 overlap the first core 11 of the multicore fibre 10, and the second feed fibres 2 overlap the second core 12 of the multicore fibre 10 as shown in Figure 4. Optical radiation that expands from the cores 205 of the first feed fibres 1 into their claddings 206 as the fibre bundle 200 is tapered is thereby coupled into the first core 11 of the multicore fibre 10. Similarly, optical radiation that expands from the cores 207 of the second feed fibres 2 into their claddings 208 as the fibre bundle 200 is tapered is thereby coupled into the second core 12 of the multicore fibre 10.

The tapering may be such that the first and the second feed fibres 1, 2 are substantially undistorted at their distal ends, such as shown in Figure 4. Alternatively, the tapering in this and other embodiments of the invention may be such that the first and/or the second feed fibres 1, 2 collapse together to reduce or remove the interstitial spaces between the fibres at their distal ends.

The multicore fibre 10 has a glass body 311 surrounding the second core 12. The glass body 311 may be surrounded by an outer cladding 312. The outer cladding 312 may have a refractive index n₆ less than the refractive index n₃ of the glass body 311. The difference in the refractive indices n₃ - n₆ is preferably sufficiently large to enable optical radiation that is coupled into the glass body 311 from the fibre bundle 200 to be guided along the multicore fibre 10 by total internal reflection.

The glass body 311 may be separated from the second core 12 by a cladding 313 that has a lower refractive index n₅ than both a refractive index n₃ of the glass body 311 and the refractive index n₂ of the second core 12. Optical radiation that is coupled into the glass body 311 from the fibre bundle 200 may be guided along the glass body 311 by total internal reflection at the interface between the glass body 311 and the cladding 313 without coupling into the second core 12. The glass body 311 may have a refractive index n₃ greater than or equal to a refractive index n₂ of the second core 12.

The glass body 311 may have a refractive index n₃ less than a refractive index n₂ of the second core 12. If the cladding 313 between the second core 12 and the glass body 311 is omitted, optical radiation couped into the second core 12 from the fibre bundle 200 may be guided along the second core 12 via total internal reflection from the boundary between the glass body 311 and the second core 12. However, optical radiation coupled into the glass body 311 from the fibre bundle 200 will not undergo total internal reflection at this boundary. Instead, it may undergo total internal reflection at the boundary between the second core 12 and the inner cladding 310 if the refractive index n₃ of the glass body 311 is higher than the refractive index n₄ of the inner cladding 310. However, if the refractive index n₃ of the glass body 311 is the same as or lower than the refractive index n₄ of the inner cladding 310, then optical radiation coupled into the glass body 311 from the fibre bundle 200 may propagate through the whole of the area inside the glass body, and be guided along the multicore fibre 10 by total internal reflection at either the boundary between the glass body 311 and the outer cladding 312 (if provided) or the outside surface of the multicore fibre 10.

The choice of the refractive index n₃ of the glass body 311 and whether or not to include the optional cladding 313 can therefore be selected dependent on the profile of the third image 36 shown with reference to Figure 1. The third image 36 is formed from the optical radiation propagating along the glass body 311, and whether or not to allow this optical radiation to propagate through the first and second cores 11, 12 or not. If a third image 36 is desired that only images the glass body 311 and not the first and second cores 11, 12, then a refractive index profile similar to that shown in Figure 3 may be used.

Advantageously, the multicore fibre 10 may be tapered before splicing to the fibre bundle 4 of Figure 1. This allows the dimensions of the fibre bundle 4 to be independent of the core diameter 301 of the multicore fibre 10. This enables the multicore fibre 10 to have a larger diameter 301 of the first core 11, so producing an increased stimulated Raman scattering threshold. An increased stimulated Raman scattering threshold is advantageous because it enables higher optical powers to be transmitted along the first core 11 before the onset of wavelength conversion caused by Raman scattering. The larger first core 11 may also reduce bend losses of optical radiation propagating along the multicore fibre 10. The multicore fibre 10 may be tapered at its distal end 13 which may reduce the diameter 301 of the first core 11. The amount of tapering at its distal end 13 and hence the diameter 301 of the first core 11 can be selected dependent on the laser processing to be performed on the material 29.

The multicore fibre 10 in Figure 1 may comprise two fibres, a high-power combiner output fibre and a process fibre (not shown), which fibres are coupled together. The provision of two fibres is advantageous because it simplifies repair and maintenance in factory locations. The coupling may comprise lenses or a fusion splice. The fibres may be tapered at the fusion splice in order to preserve or modify beam quality. The high-power combiner output fibre and the process fibre may be of the same design or a different design to each other.

Referring to Figure 1, the multicore fibre 10 may have an end cap 40 which may be made from fused silica at its distal end 13. The end cap 40 protects the distal end 13 of the multicore fibre 10 from being damaged by the high intensities of laser radiation used for laser material processing. The end cap 40 may be joined to the multicore fibre 10 by fusion splicing.

The apparatus of the present invention may include a collimator 7 at the distal end 13 of the multicore fibre 10, which collimator 7 is connected to a laser processing head 8 that comprises a focussing lens 9. The collimator 7 can be a lens. The multicore fibre 10 may emit a first beam 31 from the first core 11 and a second beam 32 from the second core 12. The multicore fibre 10 may also emit a third beam 33 from its glass body 311. The collimator 7 and the focussing lens 9 form an image of the distal end 13 of the multicore fibre 10 onto or near a surface 30 of the material 29. The image comprises a first image 34 of the first core 11 which is formed from the first beam 31, and a second image 35 of the second core 12 which is formed from the second beam 32. The image may also comprise a third image 36 of the glass body 311 which image is formed by the third beam 33. The third beam 33 is created when optical radiation is coupled from the first and/or second feed fibres 1, 2 into the glass body 311. The third beam 33 therefore also includes optical radiation that is or may be propagating in the first and second cores 11, 12 and the inner cladding 310 of the multicore fibre 10 shown in Figure 3. The third image 36 is shown as a large solid circle but may include internal structure.

In certain applications such as cutting and welding, it is desirable to have the first core 11 separated from the second core 12 with the inner cladding 310 such that the second image 35 on the surface 30 of the material has an internal diameter greater than the outer diameter of the first image 34. However, there are also cutting and welding applications, and applications in sintering metal powders (additive manufacturing) in which it is desirable that the separation is very small, for example, less than 10 µm and preferably less than 1 µm. It may be preferred that there is no separation at all. Advantageously, the width 304 of the inner cladding 310 shown with reference to Figure 3 may reduce in thickness to zero at the distal end 13 of the multicore fibre 10. The reduction in the width 304 can be achieved by dopant diffusion while heating the multicore fibre 10, for example, prior to or while fusion splicing the end cap 40, and/or prior to or while tapering the multicore fibre 10 at its distal end 13. The dopant that diffuses may be fluorine which may diffuse into one or more of the first core 11, the second core 12, and the end cap 40. A zero width 304 enables the second image 35 on the surface 30 of the material to have an internal diameter that is equal to the outer diameter of the first image 34.

Alternatively or additionally, a reduction in the width 304 may also be provided at the splice between the multicore fibre 10 and the fused taper beam combiner 4. The reduction in the width 304 can be achieved by dopant diffusion while heating the multicore fibre 10, for example, prior to or while fusion splicing the multicore fibre 10 to the fused taper beam combiner 4. The dopant may be fluorine which may diffuse into one or more of the first core 11, the second core 12, and the fused taper beam combiner 4. The reduction in the width 304 may be provided in multicore fibres 10 that are tapered at the end that is spliced to the fibre bundle 4 as well in multicore fibres 10 that are untapered at the end that is spliced to the fibre bundle 4. The reduction in the width 304 enables a multicore fibre 10 to be selected that has a larger width 304 for the same coupling losses. Increasing the width 304 reduces the cross coupling between optical modes propagating in the first core 11 and modes propagating in the second core 12.

The number of the first and the second lasers 15, 16, the powers of the first and second laser radiation 18, 19, and the cross-sectional areas of the first core 11 and the second core 12 of the multicore fibre 10 may be selected such that the optical intensities of the first and second images 34 and 35 are equal to each other. This may be advantageous in applications which require equal optical intensities (power per unit area) on the surface 30 of the material 29 when switching between the first image 34 and the second image 35, or when switching between either a single first image 34 or a single second image 35 to a composite image comprising both the first and the second images 34, 35.

Prior to tapering the first and second feed fibres 1, 2, the first feed fibre 1 may have a core diameter 209 of 13.5 µm and a cladding diameter 210 of 200 µm. The second feed fibre 2 may also have a core diameter 211 of 13.5 µm and a cladding diameter 212 of 200 µm. The first core 11 of the multicore fibre 10 may have a core diameter 301 of 100 µm. The second core 12 may have an inner core diameter 302 of 125 µm and an outer core diameter 303 of 250 µm. The fibre bundle 200 may have a taper ratio of five. The taper ratio is defined by a diameter at the input 5 of the fibre bundle 4 divided by a diameter at the output 6 of the fibre bundle 4. The fibre bundle 200 enables up to four first lasers 15 and up to fifteen second lasers 16 to be used in the apparatus shown in Figure 1. The design therefore enables power scaling, with the number of the first and second lasers 15, 16 able to be selected dependent on the specific laser processing requirement. Other numbers of first and second feed fibres 1, 2 can be chosen with the same or different core and cladding diameters. Other core diameters 301, 302, 303 can be chosen. For example, industry standard power cables often have 25 µm, 50 µm, 100 µm, 150 µm, 200µm or 300 µm diameter cores, and these core diameters can be selected for the core diameter 301 of the first core 11 of the multicore fibre 10. First and second feed fibres 1, 2 that are not connected or intended to be connected to lasers may be replaced with glass tubes or rods that have no cores. The glass tubes or rods may be made from silica.

Advantageously, the inner capillary 202 can comprise grooves 51 on its outside surface as shown in Figure 5. The grooves 51 may assist in assembling the fibre bundle 200 when assembling a bundle that has both multiple fibres and one or more internal capillaries. This is because the fibres are difficult to position correctly with respect to each other, and can fall out of alignment. The grooves 51 can be part-circular as shown, or they can be triangular or U-shaped. Other shapes are also possible. The grooves 51 can be made by machining the inner capillary 202 with a carbon dioxide laser or by acid etching for example. Preferably, the grooves 51 are made by forming them in a larger diameter glass capillary using a carbon dioxide laser. The large diameter glass capillary is then drawn to size by applying heat, preferably in an optical fibre draw tower used in the manufacture of optical fibres. Alternatively, or in addition, grooves can also be formed on the inside surface of the inner capillary 202 and/or the inside surface of the outer capillary 201.

Figure 6 shows an example of a fibre bundle 60 in which the first feed fibres 1 are arranged in a triangular formation. The fibre bundle 60 has three first feed fibres 1. The fibre bundle 60 may have grooves 51 on the surfaces of the inner capillary 202 and/or the surfaces of the outer capillary 201 as described with reference to Figure 5, to aid in the assembly of the bundle. The same first and second feed fibres 1, 2 may be used as described with reference to Figure 2. The first core 11 of the multicore fibre 10 may have a core diameter 301 of 75 µm. The second core 12 may have an inner core diameter 302 of 100 µm and an outer core diameter 303 of 400 µm. The fibre bundle 60 may have a taper ratio of six. Other dimensions may also be used.

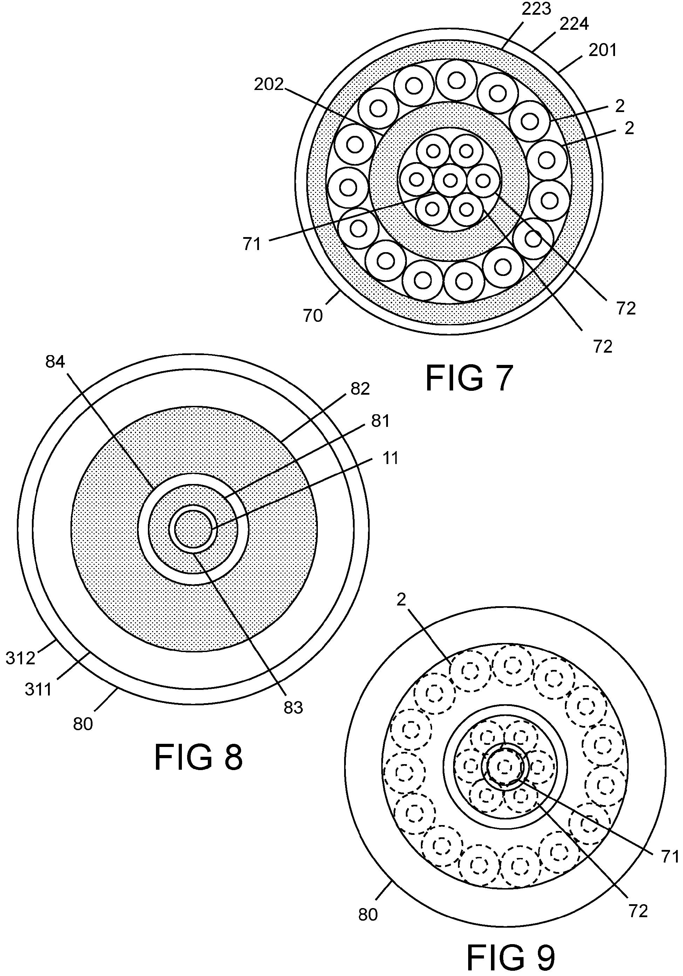

Figure 7 shows an example of a fibre bundle 70 in which the feed fibres are arranged in a hexagonal closed packed formation. The fibre bundle 70 has a central feed fibre 71 aligned to the central axis of the fibre bundle 70 surrounded by feed fibres 72. The fibre bundle 70 can comprise grooves 51 such as described with reference to Figure 5.

The fibre bundle 70 can be tapered and spliced to the multicore fibre 10 of Figure 3 such that the central feed fibre 71 and the feed fibres 72 are coupled to the first core 11 of the multicore fibre 10. In this arrangement, the central feed fibre 71 and the feed fibres 72 are the first feed fibres 1 described with reference to Figure 1. Preferably, the taper is adiabatic in order to reduce coupling of the fundamental mode to higher order modes.

Alternatively, the fibre bundle 70 can be spliced to the multicore fibre 80 of Figure 8 which has a first core 11, surrounded by two second cores formed by an inner ring core 81 and an outer ring core 82. The first core 11 and the inner ring core 81 are separated by a cladding 83. The inner ring core 81 and the outer ring core 82 are separated by a cladding 84. The central feed fibre 71 of Figure 7 is the first feed fibre 1 of Figure 1, and is aligned with the first core 11 as shown with reference to Figures 8 and 9. The feed fibres 72 are some of the second feed fibres 2 of Figure 1, and are aligned with the inner ring core 81 as shown with reference to Figure 9. The other second feed fibres 2 of Figure 7 are aligned with the outer ring core 82 as shown with reference to Figure 9. The hexagonal closed packed structure of the central feed fibre 71 and feed fibres 72 of the fibre bundle of Figure 7, avoids the need for an additional capillary separating the central feed fibre 71 from the feed fibres 72. This is advantageous because it is possible to have a smaller diameter and thinner inner ring core 81 which can reduce the beam parameter product and hence increase the brightness of an optical beam emerging from the inner ring core 81. The first and the second lasers 15, 16 can be individually controlled such that optical radiation is emitted from the apparatus from one or more of the first core 11, the inner ring core 81 and the outer ring core 82.

High quality beams having the same angular divergence as low quality beams can be focussed to smaller diameter beam waists. High quality beams therefore have a lower beam parameter product, which is related to the product of the focussed beam waist and divergence. A high quality beam having the same optical power as a low quality beam has a higher brightness.

The multicore fibre 80 of Figure 8 can therefore be designed to have a beam with a relatively low beam parameter product emerging from the first core 11, a beam with a higher but also relatively low beam parameter product emerging from the inner ring core 81, and a beam with an even higher beam parameter product emerging from the outer ring core 82. The beams emerging from the first core 11 and inner ring core 81 are useful for key-hole welding and for cutting different thicknesses of sheet metal, and the beam emerging from the outer ring core 82 is useful for welding.

The claddings 83 and 84 can have the same or different refractive indices as each other. The refractive index of the optional outer cladding 312 may be less than the refractive indices of the claddings 83 and 84 in order that the multicore fibre 80 may guide optical radiation that is coupled into the cladding 83 and/or cladding 84 by total internal reflection. The function of the glass body 311 is described with reference to Figure 3.

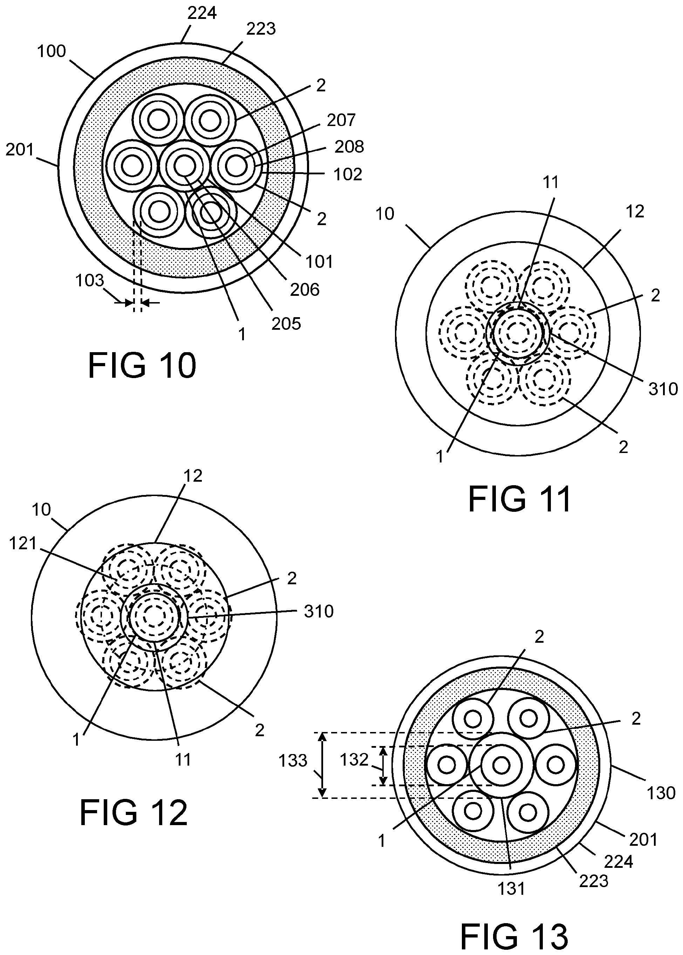

Figure 10 shows an example of a fibre bundle 100 comprising a single first feed fibre 1 and six second feed fibres 2. The first feed fibre 1 and the second feed fibres 2 are arranged in a hexagonal closed packed formation. The fibre bundle 100 has an outer capillary 201, but does not have the inner capillary 202 described with reference to Figure 2.

The first feed fibre 1 may be a double clad fibre that has an outer cladding 101. The outer cladding 101 may have a refractive index that is lower than the refractive index of the cladding 206. Alternatively or additionally, the second feed fibre 2 may be a double clad fibre that has an outer cladding 102. The outer cladding 102 may have a refractive index that is lower than the refractive index of the cladding 208. The outer cladding 101 and/or the outer cladding 102 may have a thickness 103.

Figure 11 shows how the first feed fibre 1 and the second feed fibres 2 of Figure 10 can be coupled into the multicore fibre 10 of Figure 3. The diameter 301 of the first core 11 and the inner and outer diameters 302, 303 of the second core 12 and the taper ratio of the fibre bundle 100 have been selected to ensure that the core 205 of the first feed fibre 1 and the cores 207 of the second feed fibres 2 overlap the first core 11 and the second core 12 of the multicore fibre 10 respectively, and do not overlap the inner cladding 310. The avoidance of overlap reduces splice losses. Preferably the first feed fibre 1 and the second feed fibre 2 have been weakly tapered such that their fundamental modes do not expand from their respective cores significantly. Higher order modes may suffer core expansion, thus enabling higher order modes to be coupled to modes that are guided by the glass member 223 of the fibre bundle 100. Coupling to the glass member 223 may be increased if the first feed fibre 1 and/or the second feed fibre 2 are single clad fibres that do not comprise the outer claddings 101, 102. The first core 11 of the multicore fibre 10 may have a core diameter 301 of 25 µm. The second core 12 may have an inner core diameter 302 of 40 µm and an outer core diameter 303 of 100 µm. The fibre bundle 100 may have a taper ratio of 8. Other dimensions may also be used.

Figure 12 shows an alternative configuration of the first feed fibre 1 and the second feed fibres 2 of Figure 10 being coupled into the multicore fibre 10 of Figure 3. The multicore fibre 10 is designed such that the cores of the second feed fibres 2 are aligned approximately to a circle 121 that has a diameter equal to the average of the inner and outer diameters 302, 303 of the second core 12. The difference between the outer and inner diameters 302, 303 is less in Figure 12 than in Figure 11. The reduced size of the second core 12, together with the central coupling of the second feed fibres 2, will result in a lower beam parameter product (higher beam quality) of the laser radiation emitted by the second core 12. This is advantageous for applications requiring higher beam quality, such as cutting or key-hole welding.

Referring again to Figure 11, the first feed fibre 1 and/or the second feed fibre 2 may be double clad fibres that comprise the outer claddings 101, 102. The diameter 301 of the first core 11 and the inner and outer diameters 302, 303 of the second core 12 and the taper ratio of the fibre bundle 100 have been selected to ensure that the cladding 206 of the first feed fibre 1 and the claddings 208 of the second feed fibres 2 overlap the first core 11 and the second core 12 of the multicore fibre 10 respectively, and do not overlap the inner cladding 310. The avoidance of overlap reduces splice losses. Preferably the first feed fibre 1 and the second feed fibre 2 are strongly tapered such that their fundamental modes expand from their respective cores 205, 207 and are then guided against their respective outer claddings 101, 102. The fundamental modes then have a larger mode field diameter or spot size than in the case in which the first and second feed fibres 1, 2 are weakly tapered. The fundamental modes will also have a lower divergence when launched into the multicore fibre 10 if the first and second feed fibres 1, 2 are strongly tapered. The lower divergence can reduce the beam parameter product, and hence improve the beam quality, of the first and second beams 31 and 32 emitted from the multicore fibre 10, which can be advantageous for applications requiring high beam quality such as cutting thin sheets of metal or key-hole welding. Higher order modes will also experience mode field expansion and may also be guided against the outer claddings 101, 102. However, if the outer claddings 101, 102 are sufficiently thin, for example less than 5 to 10 µm, although other thickness are also possible, or not present at all, then the tapering will enable higher order modes of the first and second feed fibres 1, 2 to be coupled to modes that are guided by the glass member 223 of the fibre bundle 100.

The cores of the second feed fibres 2 in Figure 11 do not align with the circle 121 shown with reference to Figure 12. This is advantageous if it is desired that the laser radiation emitted by the second core 12 should have a relatively large beam parameter product. Launching off centre into a relatively large area annular core will typically launch many optical modes having different radial mode numbers, increasing the beam parameter product of the resulting laser radiation.

The fibre bundle of Figure 10 is advantageous as it is relatively easy to assemble the first and second feed fibres 1, 2 with an optimal close-packed geometry. However, it can be difficult to ensure accurate alignment to the first and second cores 11, 12 of the multicore fibre 10 such that optical radiation is not coupled to the inner cladding 310. This can be solved by introducing a low index ring 131 as shown in the fibre bundle 130 of Figure 13 wherein the low index ring 131 has a refractive index less than a refractive index of the cladding 206 of the first feed fibre 1. The low index ring 131 can be provided as one or more of (i) an inner capillary into which the first feed fibre 1 is inserted, (ii) an outer cladding of the first feed fibre 1, and (iii) an outer cladding of the second feed fibres 2. Coupling from the first and second feed fibres 1, 2 into the inner cladding 310 can then be minimised by optimisation of the relative dimensions of the first and second feed fibres 1, 2, the low index ring 131, the taper ratio of the fibre bundle 100, and the first and second cores 11, 12 of the multicore fibre 10. With reference to Figures 3 and 13, after tapering, the low index ring 131 preferably has an inner diameter 132 less than the diameter 301 of the first core 11, and an outer diameter 133 greater than the inner diameter 302 of the second core 12. The low index ring 131 can comprise a borosilicate glass or fluorine-doped silica.

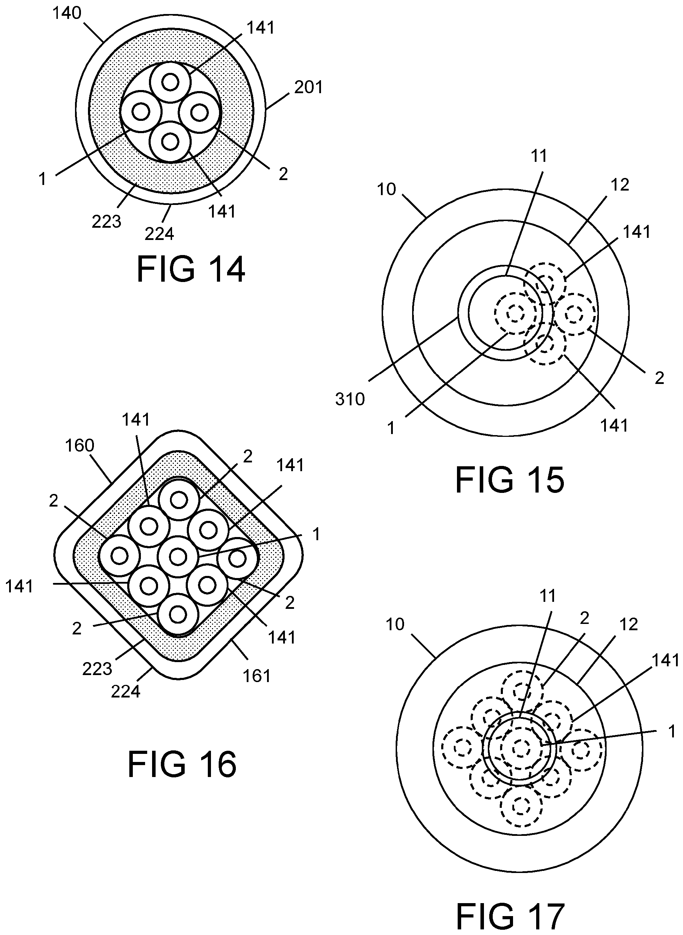

Figure 14 shows a fibre bundle 140 that has four fibres assembled into the outer capillary 201. As shown in Figure 15, one of these fibres can be used as the first feed fibre 1 by offsetting the bundle radially when splicing to the multicore fibre 10 of Figures 1 and 3. The diagonally opposite fibre is then the second feed fibre 2, and the remaining fibres are spacing fibres 141. If the cores of the spacing fibres 141 overlap the second core 12 and not the inner cladding 310, the spacing fibres 141 can be used as additional second feed fibres 2. If however the cores of the spacing fibres 141 overlap the inner cladding 310, then the spacing fibres 141 can be made from pure silica, and their cores can be omitted. This bundle geometry is beneficial in that it enables the production of separate / non-adjacent first and second feed fibres 1, 2 without the need to introduce an inner capillary to the bundle assembly. Thus the bundle geometry may have a better match to the geometry of the multicore fibre 10. It can therefore improve the transmission efficiency of the combiner, without the additional cost and complexity associated with the use of an inner capillary that separates the first feed fibre 1 from the second feed fibre 2. The same first and second feed fibres 1, 2 may be used as described with reference to Figure 2. The first core 11 of the multicore fibre 10 may have a core diameter 301 of 100 µm. The second core 12 may have an inner core diameter 302 of 120 µm and an outer core diameter 303 of 400 µm. The fibre bundle 140 may have a taper ratio of 6. Other dimensions may also be used.

Figure 16 shows a fibre bundle 160 that comprises one first feed fibre 1, four second feed fibres 2, and four spacing fibres 141. The outer capillary 161 is a square capillary. Figure 17 shows the overlap of the first feed fibre 1, second feed fibres 2, and the four spacing fibres 141 when the fibre bundle 160 is spliced to the multicore fibre 10 of Figure 3. There are now four second feed fibres 2 that can couple into the second core 12, each of which allow for coupling to the inner cladding 310 to be avoided. Depending on the sizes of the first core 11 and second core 12, the four spacing fibres 141 in the bundle can be unused, or if the cores of the spacing fibres 141 overlap the second core 12 and not the inner cladding 310, the spacing fibres 141 can be used as additional second feed fibres 2. This geometry of the fibre bundle 160 is beneficial in that it produces a first feed fibre 1 and four second feed fibres 2 that are spatially separated from each other, without the need to introduce an inner capillary to the bundle assembly. The bundle geometry may have a better match to the geometry of the multicore fibre 10 and so improves the transmission efficiency of the combiner, without the additional cost and complexity associated with the use of an additional capillary. The provision of the four second feed fibres 2 provides up to four times the power handling capability compared to the fibre bundle 140 of Figure 14 and thus provides power scaling. The same first and second feed fibres 1, 2 may be used as described with reference to Figure 2. The first core 11 of the multicore fibre 10 may have a core diameter 301 of 100 µm. The second core 12 may have an inner core diameter 302 of 120 µm and an outer core diameter 303 of 400 µm. The fibre bundle 160 may have a taper ratio of 6. Other dimensions may also be used.

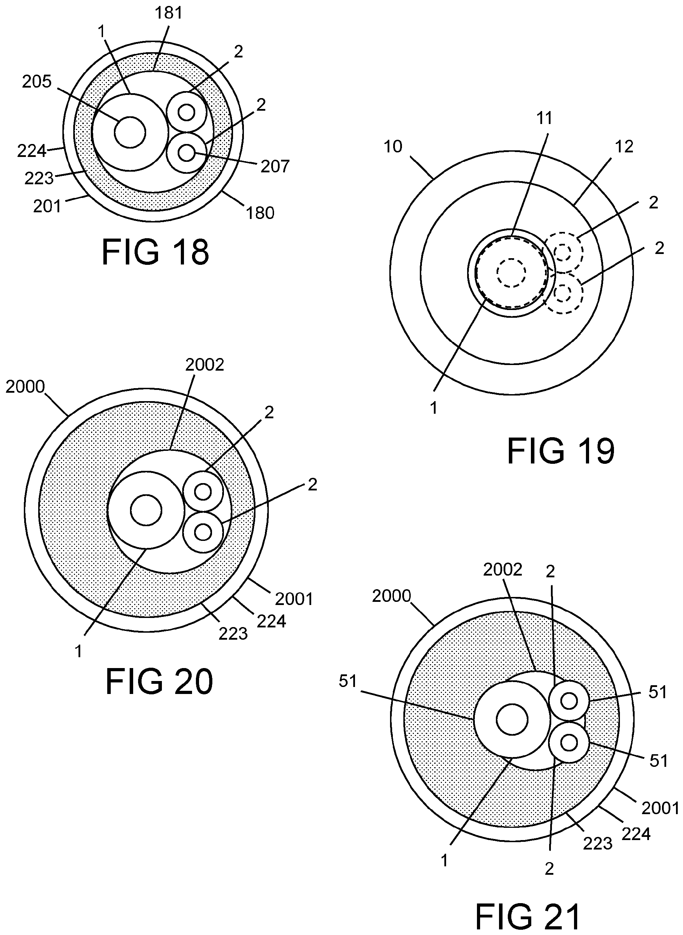

Figure 18 shows a fibre bundle 180 in which the first feed fibre 1 and the second feed fibres 2 are arranged such that the first feed fibre 1 is to one side of the second feed fibres 2 and is against the wall of a bore 181 of the capillary 201. Figure 19 shows how the first feed fibre 1 and second feed fibres 2 overlap the first core 11 and the second core 12 of the multicore fibre 10 of Figure 3. The arrangement shown requires a radially offset splice to the multicore fibre 10.

Figure 20 shows a fibre bundle 2000 which has a capillary 2001 having an offset bore 2002. The offset bore 2002 is offset by an amount that ensures the outside of the capillary 2001 is concentric with the outside of the multicore fibre 10 while ensuring that the first feed fibre 1 and the second feed fibres 2 align to the first and second cores 11, 12. The bore 2002 is preferably non-circular to aid rotational alignment while splicing to the multicore fibre 10.

The bore 181 of Figure 18 and the bore 2002 of Figure 20 may contain grooves 51, as shown in Figure 21. The grooves 51 can be provided by ultrasonic drilling, liquid phase etching, or gas phase etching of a glass capillary tube prior to reducing the capillary's diameter in a fibre draw tower.

The same first and second feed fibres 1, 2 may be used in the fibre bundles 180 and 2000 as described with reference to Figure 2. The first core 11 of the multicore fibre 10 may have a core diameter 301 of 25 µm. The second core 12 may have an inner core diameter 302 of 40 µm and an outer core diameter 303 of 100 µm. The fibre bundle 180 may have a taper ratio of 6. Other dimensions may also be used.

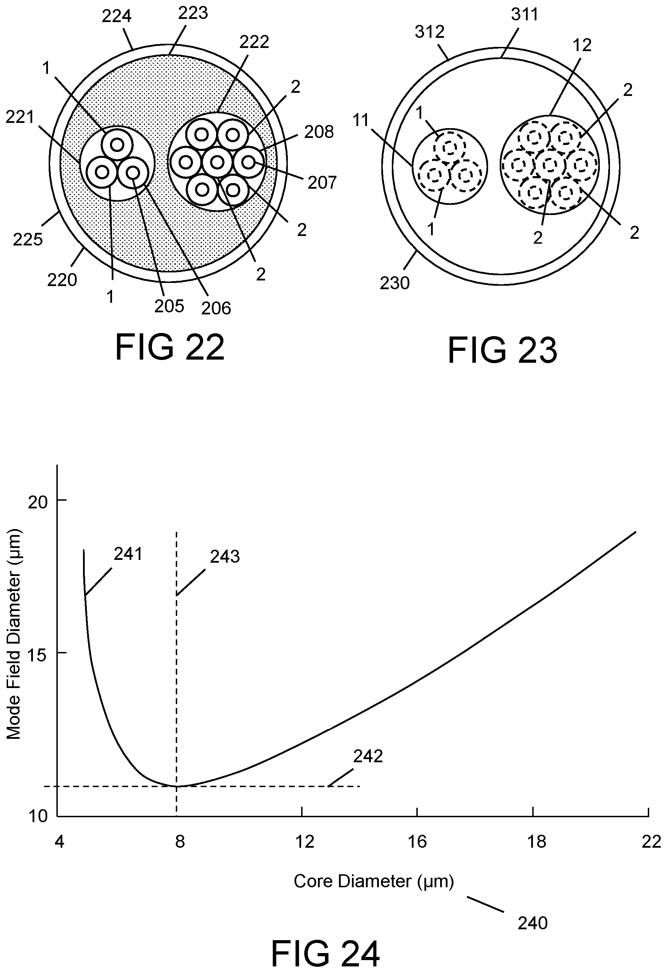

Figure 22 shows a fibre bundle 220 comprising a capillary 225 having a first bore 221 and a second bore 222. The first feed fibres 1 are arranged in the first bore 221 and the second feed fibres 2 are arranged in the second bore 222. The capillary 225 comprises a glass body 223 that comprises the first and second bores 221, 222, surrounded by an optional glass outer cladding 224. Advantageously, the refractive index of the outer cladding 224 may be less than the refractive index of the glass body 223 in order that the glass body 223 can guide light that may be coupled into the glass body 223 from the first feed fibres 1 and/or the second feed fibres 2 as the light propagates down the fibre bundle 220. The glass body 223 may alternatively guide against air. The fibre bundles 200, 60, 70, 100, 130, 140, 160, 180, 2000, and 251 described with reference to Figures 2, 6, 7, 10, 13, 14, 16, 18, 20 and 25 may also have a glass outer cladding 224 for guiding light that may be coupled out of the first feed fibre or fibres 1 and/or the second feed fibre or fibres 2.

The fibre bundle 220 is assembled, tapered, cleaved, and coupled to the multicore fibre 230 shown in Figure 23. The first and second feed fibres 1, 2 can be individually tapered and then assembled. Alternatively, the first and second feed fibres 1, 2 can be assembled into a bundle, and the whole bundle tapered collectively. The multicore fibre 230 has a glass body 311. The glass body 311 is made from a glass that has a lower refractive index than the refractive indices of both the first core 11 and the second core 12. The glass body 311 may be made from silica or fluorine-doped silica. The glass body 311 may be surrounded by an outer cladding 312 having a lower refractive index than the refractive index of the glass body 311. The outer cladding 312 may be glass. The tapering is such that the first feed fibres 1 overlap the first core 11 of the multicore fibre 230, and the second feed fibres 2 overlap the second core 12 of the multicore fibre 230 as shown in Figure 23. Referring also to Figures 2 and 22, optical radiation that expands from the cores 205 of the first feed fibres 1 into their claddings 206 as the fibre bundle 220 is tapered is thereby coupled into the first core 11 of the multicore fibre 10. Similarly, optical radiation that expands from the cores 207 of the second feed fibres 2 into their claddings 208 as the fibre bundle 220 is tapered, is thereby coupled into the second core 12 of the multicore fibre 230. Optical radiation that is coupled from the first feed fibres 1 and/or second feed fibres 2 into the glass body 223 as the optical radiation propagates along the fibre bundle 220, is thereby coupled into the glass body 311 of the multicore fibre 230. The multicore fibres 10 and 80 shown with reference to Figures 3 and 8 may also have an outer cladding 312 for guiding optical radiation that may be coupled out of the first feed fibre 1 and/or the second feed fibre 2. If the outer cladding 312 has a lower refractive index than the refractive index of the glass body 311, then as shown in Figure 1, this optical radiation can be guided along the glass body 311 to the distal end 13 of the multicore fibres 10, 80 or 230.

Referring again to Figure 1, the first laser 15, or at least one of the first lasers 15 if a plurality of the first lasers 15 is employed, may comprise a single mode laser that emits a single transverse or fundamental optical mode. Alternatively or additionally, the first laser or lasers 15 may comprise a multimode laser that emits multiple transverse optical modes.

The second laser 16, or at least one of the second lasers 16 if a plurality of the second lasers 16 is employed, may comprise a single mode laser or a multimode laser.

The first laser 15 and the second laser 16 may each comprise an output fibre 38 which is fusion spliced in a splice 37 to the first and second feed fibres 1, 2. The first and second feed fibres 1, 2 may be single mode or multimode fibres.

Each first laser 15 may be a single mode laser, the output fibre 38 connected to the first laser 15 may be either a single mode fibre or a multimode fibre, and the splice 37 may be such that the fundamental mode of the output fibre 38 is coupled to the fundamental mode of the first feed fibre 1. Tapering of the output fibre 38 and/or the first feed fibre 1 at the splice 37 can be used to match the profiles of the fundamental modes of the output fibre 38 and the first feed fibre 1 at the splice 37, and thereby increase the coupling efficiency of the fundamental modes if there is a mismatch in their mode field diameters. Preferably, the taper is adiabatic in order to reduce coupling from the fundamental mode of the first feed fibre 1 to higher order modes of the first feed fibre 1. Configuring the first feed fibre 1 such that it propagates substantially in its fundamental mode through the fibre bundle 4, can reduce optical losses and increase brightness of the first beam 31. This is advantageous for applications requiring high brightness such as cutting and key-hole welding.

When the second laser 16 is a single mode laser, the output fibre 38 connected to the second laser 16 may be either a singlemode fibre or a multimode fibre, and the splice 37 is such that the fundamental mode of the output fibre 38 is coupled to the fundamental mode of the second feed fibre 2. Tapering of the output fibre 38 and/or the second feed fibre 2 at the splice 37 can be used to match the profiles of the fundamental modes of the output fibre 38 and the second feed fibre 2 at the splice 37, and thereby increase the coupling efficiency of the fundamental modes if there is a mismatch in their mode field diameters. Preferably, the taper is adiabatic in order to reduce coupling from the fundamental mode of the second feed fibre 2 to higher order modes of the second feed fibre 2. Configuring the second feed fibre 2 such that it propagates substantially in its fundamental mode through the fibre bundle 4, can reduce optical losses and increase brightness of the second beam 32. This is advantageous for applications requiring high brightness such as cutting and key-hole welding.

The first laser or lasers 15 and the second laser or lasers 16 can be diode lasers, fibre lasers, disk lasers, or solid state lasers. Preferably the first and the second lasers 15, 16 are fibre lasers. The first and the second lasers 15, 16 may be continuous mode, quasi continuous mode lasers, or pulsed lasers. The first and the second lasers 15, 16 may be master oscillator power amplifier lasers. At least one of the first and the second lasers 15, 16 may emit visible laser radiation which may be used to align at least one of the collimator 7, the processing head 8 and the focussing lens 9 with the material 29 to be processed. The first and the second lasers 15, 16 are preferably kilowatt lasers that can emit between 1 kW and 10 kW of average power. At least one of the first and the second lasers 15, 16 may emit infrared radiation. The infrared radiation may be in a wavelength range 700 nm to 2500 nm, and preferably in the wavelength range 1000 nm to 1100 nm. At least one of the first and the second lasers 15, 16 may emit visible radiation. The visible radiation may be in the wavelength range 400 nm to 650 nm, and more preferably in the wavelength range 500 nm to 560 nm.

The first laser 15, or at least one of the first lasers 15 if a plurality of the first lasers 15 is employed, may be connected to a mode converter 17. Alternatively or additionally, the second laser 16, or at least one of the second lasers 16 if a plurality of the second lasers 16 is employed, may be connected to a mode converter 17. The mode converter 17 may be an internal component of the first laser 15 or the second laser 16. Mode converters can couple optical modes that propagate along the optical fibres, and can be used to control the beam quality or brightness of first laser radiation 18 emitted by the first laser or lasers 15 and the beam quality or brightness of second laser radiation 19 emitted by the second laser or lasers 16. Mode converters can be made using a mechanism that squeezes or bends an optical fibre, for example, as taught by US Patent Application No. 2019262949 and US Patent No. 10,295,845. The optical fibre can be a step index fibre, or a graded index fibre which may be spliced to a step index fibre at its output. The amount of mode coupling provided by the mode converter 17 can be controlled by an actuator (not shown).

The mode converter 17 may be one in which a fundamental mode is coupled to a single higher-order mode of the first feed fibre 1 or the second feed fibre 2. Such mode converters are taught in US Patent Application No. 20210362269. The single higher-order mode can be selected by experimentation by selecting an optical mode that is coupled out of the first or second feed fibre 1, 2 as the optical mode propagates along the fibre bundle 4, and is then guided by the glass body 223 of the fibre bundle 4 and the glass body 311 of the multicore fibre 10. Such a higher-order mode may be a mode that experiences cut-off in the first or second feed fibre 1, 2 as its core diameter is reduced along the taper. Cut-off occurs because the smaller diameter core is too small to guide the higher-order mode. The higher order mode can be guided by the glass body 223 because of its larger diameter.

The higher order mode or modes may be coupled to other higher order modes within the fibre bundle 4.

The mode converter 17 may be one in which a fundamental mode is coupled to a plurality of higher-order modes of the first feed fibre 1 or the second feed fibre 2. The amount of coupling can be selected by experimentation by ensuring that the mode converter only couples to higher order modes that can propagate along the fibre bundle 4 and the glass body 311 of the multicore fibre 10 without loss.

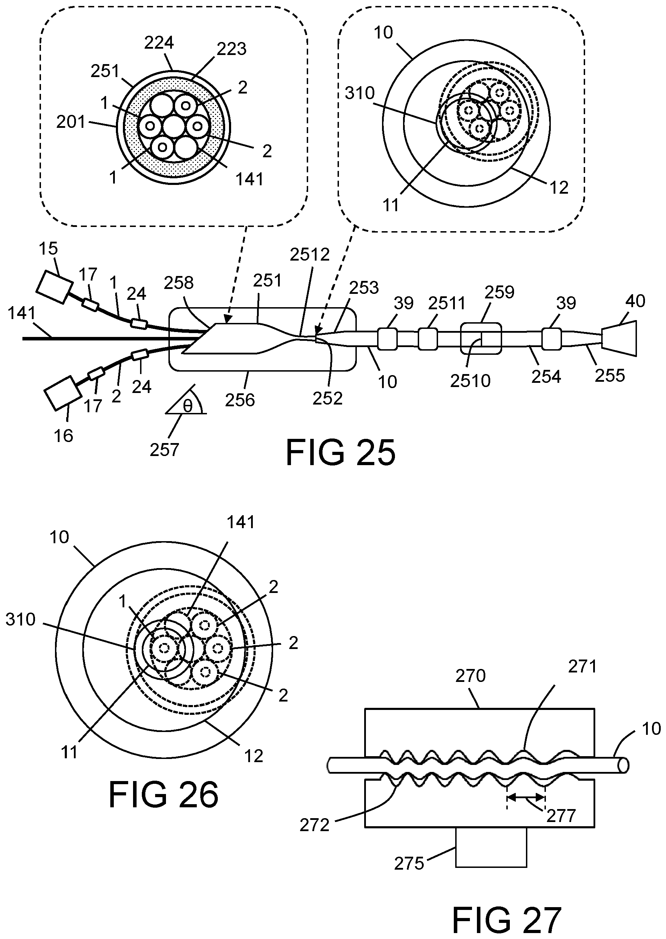

As shown in Figure 1, the apparatus of the present invention may also comprise a mode converter 2511, described with reference to Figure 25, for coupling optical modes together that are propagating in at least one of the first core 11 and the second core 12 of the optical fibre 10.

The apparatus of the present invention may include a cladding mode stripper 24 on at least one of the first feed fibres 1 and on at least one of the second feed fibres 2.

The apparatus of the present invention may include a cladding mode stripper 39 on the multicore fibre 10.

The cladding mode strippers 24 and 39 can each be one in which the fibre is surrounded by a polymer of higher refractive index that its outer glass cladding. Alternatively or additionally, the cladding mode strippers 24 and 39 can have grooves cut or etched into the fibre's outer glass cladding. Laser-etched cladding mode strippers are described by Imen et al, (Opt. Lett 15(17), p950-2, 1990). Cladding mode strippers can remove light that propagates along the optical fibre's cladding and which light could otherwise cause heating or optical problems in downstream components such as optical beam combiners or beam-delivery-optics.

In operation, each first laser 15 may be a single mode laser and the first laser radiation 18 may be propagating in the fundamental mode of the output fibre 38. The first feed fibre 1 may be a multimode fibre, for example, a fibre that supports a fundamental mode, a second order mode, and a third order mode. The fibre may support modes having mode orders higher than three. Each splice 37 is preferably such that the fundamental mode of the output fibre 38 is coupled to the fundamental mode of the first feed fibre 1. The fundamental mode of the first feed fibre 1 propagates along the core 205 of the first feed fibre 1, through the fibre bundle 4, and is coupled to the first core 11 of the multicore fibre 10 from where it is directed to the first image 34 on the surface 30 of the material 29. Turning each of the first lasers 15 on and off will turn the first image 34 on and off. Varying the output powers from all or some of the first lasers 15 will vary the intensity of the first image 34 and may also vary the beam quality and hence the size of the first image 34.

The mode converter 17 at the output of the first laser 15 may be operated to couple at least one higher order mode into the first feed fibre 1. These higher order modes may propagate through the fibre bundle 4 and launch higher order modes within the first core 11. Optical beams having higher proportion of higher order modes have lower brightness than optical beams have a lower proportion of higher order modes. Thus the mode converter 17 can be used to control the brightness, and hence beam quality and size of the first image 34.

The first feed fibre 1 may be such that when tapered, higher order modes couple from the core 205 of the first feed fibre 1 to its cladding 206. Such coupling to cladding modes may increase the variation in brightness, beam quality and size of the first image 34 that can be achieved with the mode converter 17.

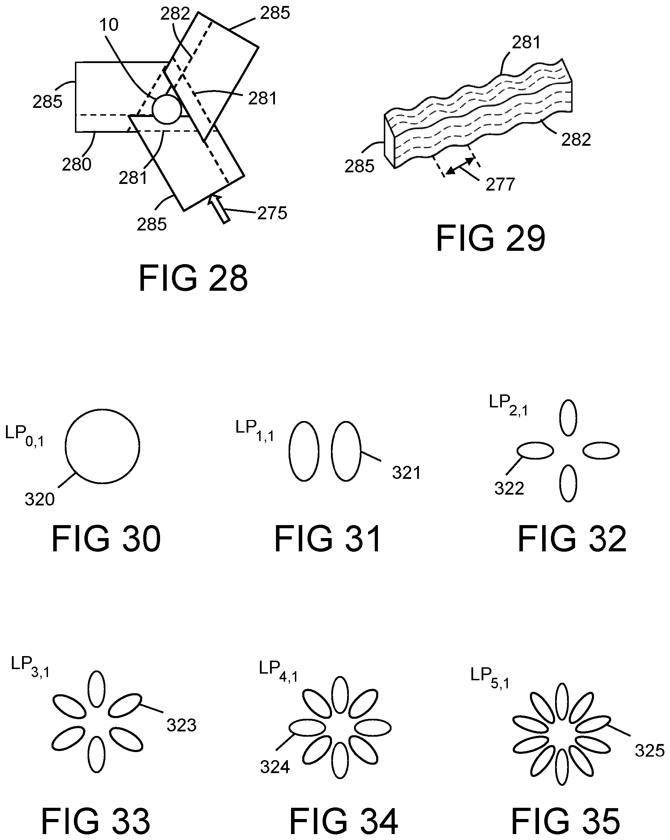

The fibre bundle 4 and the first feed fibre 1 may be such that when tapered, certain higher order modes couple from the core 205 of the first feed fibre 1 to the glass body 311. For example, LP_{p,q} modes (described with reference to Figures 30 to 35) will cut off in the taper if (i) the azimuthal mode number p is greater than the normalized frequency V-value of the first feed fibre 1 divided by the taper ratio, or (ii) the radial mode number q is greater than the normalized frequency V-value of the first feed fibre 1 divided by the product of the taper ratio and π. For double clad fibres having a fluorine doped outer cladding, the inner cladding will act as the core, and its radius should be used in the calculation of the normalized frequency V-value. Alternatively, or additionally, the modes which are cut off in the taper, and which therefore couple to the glass body 311 can be found using beam propagation theory or through experimentation. The mode converter 17 can thus switch the laser radiation emitted by the multicore fibre 10 from the first beam 31 to the third beam 33 by coupling to one or more of the higher order modes that couple from the core 205 of the first feed fibre 1 to the glass body 311. The third beam 33 can have a beam parameter product that can be in the range 10 to 100 times larger than a beam parameter product of the first beam 31. Even larger variations in beam parameter product are also possible.

Varying the mode order of the first laser radiation 18 being coupled into the first feed fibre 1 with the mode converter 17 thus provides a large variation in brightness, beam quality and size of the first image 34 and third image 36 that can be achieved.

Similarly, the second laser 16 may be a single mode laser and the second laser radiation 19 may propagate in the fundamental mode of the output fibre 38. The second feed fibre 2 may be a multimode fibre, for example a fibre that supports a fundamental mode, a second order mode, and a third order mode. The fibre may support a mode having a higher mode order than three. The splice 37 is preferably such that the fundamental mode of the output fibre 38 is coupled to the fundamental mode of the second feed fibre 2. This propagates along the core 207 of the second feed fibre 2, through the fibre bundle 4, and is coupled to the second core 12 of the multicore fibre 10 from where it is directed to the second image 35 on the surface 30 of the material 29. Turning each of the second lasers 16 on and off will turn the second image 35 on and off. Varying the output powers from all or some of the first lasers 15 will vary the intensity of the first image 34. Varying the output powers from all or some of the second lasers 16 will vary the intensity of the second image 35.

The mode converter 17 at the output of the second laser 16 may be operated to launch at least one higher order mode into the second feed fibre 2. These higher order modes may propagate through the fibre bundle 4 and launch higher order modes within the second core 12. Optical beams having higher proportion of higher order modes have lower brightness than optical beams have a lower proportion of higher order modes. Thus the mode converter 17 can be used to control the brightness of the second image 35.

The fibre bundle 4 and the second feed fibre 2 may be such that when tapered, certain higher order modes couple from the core 207 of the second feed fibre 2 to the glass body 311. For example, LP_{p,q} modes (described with reference to Figures 30 to 35) will cut off in the taper if (i) the azimuthal mode number p is greater than the normalized frequency V-value of the second feed fibre 2 divided by the taper ratio, or if (ii) the radial mode number q is greater than the normalized frequency V-value of the second feed fibre 2 divided by the product of the taper ratio and π. For double clad fibres having a fluorine doped outer cladding, the inner cladding will act as the core, and its radius should be used in the calculation of the normalized frequency V-value. Alternatively, or additionally, the modes which are cut off in the taper, and which therefore couple to the glass body 311 can be found using beam propagation theory or through experimentation. The mode converter 17 can thus switch the laser radiation emitted by the multicore fibre 10 from the second beam 32 to the third beam 33 by coupling to one or more of the higher order modes that couple from the core 207 of the second feed fibre 2 to the glass body 311. The third beam 33 can have a beam parameter product that can be in the range 10 to 100 times larger than a beam parameter product of the second beam 32. Even larger variations in beam parameter product are also possible.

Varying the mode order of the second laser radiation 19 being coupled into the second feed fibre 2 with the mode converter 17 thus provides a large variation in brightness, beam quality and size of the second image 35 and the third image 36 that can be achieved.

The fibre bundle 4 may contain an outer cladding 224 as shown in Figure 2 and 22 such that optical radiation that is not guided along the cladding 206 of the first feed fibre 1 or the cladding 208 of the second feed fibre 2 can be guided along the fibre bundle 4 and delivered to the multicore fibre 10.

The multicore fibre 10 may contain a glass body 311 and an outer cladding 312 shown with reference to Figure 3. The first feed fibre 1 shown in Figure 2 may be such that when tapered, higher order modes couple from the core 205 of the first feed fibre 1 to the outer capillary 201 and/or inner capillary 202 (if provided) of the fibre bundle 4. Similarly, the second feed fibre 2 of Figure 2 may be such that when tapered, higher order modes couple from the core 207 of the second feed fibre 2 to the outer capillary 201 and/or inner capillary 202 (if provided) of the fibre bundle 4. These higher order modes then propagate though the fibre bundle 4 and to the glass body 311 of the multicore fibre 10 shown in Figure 3. The glass body 311 of the multicore fibre 10 may have a larger cross-sectional area than the first core 11 or the second core 12, and thus will output a beam with a much lower beam quality than emitted by the first core 11 or the second core 12. The mode converters 17 can therefore be used to provide a large degree of control of the output beams emitted by the multicore fibre 10, from varying the beam quality of the beams emitted from the first core 11 and the second core 12, to coupling varying proportions of power between the first core 11, the second core 12 and the glass body 311 of the multicore fibre 10.

The control unit 28 can therefore control the powers, intensities, spot sizes, and beam parameter products of the first, second and third beams 31, 32, 33 emitted from the first core 11, the second core 12, and the glass body 311 by individually controlling the first laser 15 or each of the first lasers 15, the second laser 16 or each of the second lasers 16, the optical switch 20 or each of the optical switches 20, and the mode converter 17 or each of the mode converters 17.

Figure 24 shows how the mode field diameter 241 of the fundamental mode of a typical first or second feed fibre 1, 2 decreases with decreasing core diameter 240 until it reaches a minimum mode field diameter 242 at a critical diameter 243. Reducing the core diameter 240 below the critical diameter 243 causes the mode field diameter 241 to increase. Tapering such that the core diameter 240 is less than the critical diameter 243 can be referred to as strong tapering. Strong tapering can be advantageous because as the mode field diameter 241 increases, the divergence angle of laser radiation emitted from the first and/or second feed fibres 1, 2 decreases. Strong tapering may help to preserve beam quality of laser radiation propagating along the first and second feed fibres 1, 2 after the first and second feed fibres 1, 2 have been spliced to the multicore fibre 10. Weak tapering, that is tapering such that the core diameter 240 remains above the critical diameter 243, can be used to minimize the mode field diameter 241 at the end of the taper. Weak tapering can be advantageous if it is desired to achieve a smaller mode field diameter 241 at the end of the taper. A smaller mode field diameter 241 can be used to excite a larger number of higher order modes of a multimode core such as the second core 12 and 82 of the multicore fibres 10, 80 and 230 shown in Figures 3, 8 and 23 respectively, and thus obtain a more uniform output distribution of the laser radiation emitted from the multicore fibre 10. The output distribution can be made even more uniform by using two or more core diameters 240 in the first and/or second feed fibres 1, 2.

Referring to Figures 1, 2, 5, 6, 10, 13, 14, 16, 18, 20, 21 and 22, the first feed fibres 1 and the feed fibres 71 and 72 of Figure 7, may have a core 205 shown with reference to Figure 2 that has a core diameter 209, and a cladding 206 having a cladding diameter 210. Similarly, the second feed fibre 2 may have a core 207 shown with reference to Figure 2 that has a core diameter 211, and a cladding 208 having a cladding diameter 212.

The core diameter 209 of the first feed fibre 1 prior to tapering can be in the range 10 to 50 µm, and preferably in a range 15 to 35 µm. The cladding diameter 210 prior to tapering can be in the range 125 µm to 250 µm, and preferably in a range 200 µm to 250 µm. For cutting applications, or applications that involve both cutting and welding, the first feed fibre 1 prior to tapering is preferably a multimode fibre having a core diameter 209 of approximately 25 to 35 µm that can be operated by suitable launching conditions to deliver the fundamental mode of the first feed fibre 1 to the first core 11 of the multicore fibre 10. The taper in the first feed fibre 1 is preferably strongly tapered in order to preserve beam quality. The mode converter 17 can be used to cause coupling from the fundamental mode to higher order modes, thus providing control of the beam quality of the first image 34 on the material 29. For welding applications, the first feed fibre 1 prior to tapering is preferably a multimode fibre having a core diameter 209 in the range 50 µm to 400 µm, and more preferably 100 µm to 200 µm.

The core diameter 211 of the second feed fibre 2 prior to tapering can be in the range 10 to 50 µm, and preferably in a range 15 to 35 µm. The cladding diameter 212 prior to tapering can be in the range 125 µm to 250 µm, and preferably 200 to 250 µm. Second feed fibres 2 with different core diameters 211 can be provided in order to couple to a higher number of optical modes in the second core 12 of the multicore fibre 10 which can improve the uniformity of the output power distribution of the laser radiation emitted from the multicore fibre 10. For cutting applications, or applications that involve both cutting and welding, the second feed fibre 2 prior to tapering is preferably a multimode fibre that has a core diameter 211 of approximately 25 to 35 µm and that can be operated by suitable launching conditions to deliver the fundamental mode of the second feed fibre 2. The first feed fibre 1 is preferably strongly tapered in order to preserved beam quality. The mode converter 17 can be used to cause coupling from the fundamental mode to higher order modes, thus providing control of the beam quality of the second image 35 on the material 29. For welding applications, the second feed fibre 2 prior to tapering is preferably a multimode fibre having a core diameter 211 in the range 50 µm to 100 µm. The second feed fibre 2 is preferably weakly tapered.

The first and the second feed fibres 1, 2 can be single clad fibres that have a single cladding 206, 208, as shown with reference to Figure 2. Alternatively, one or more of the claddings 206, 208 can be surrounded by a low index ring 131 as shown in Figure 13. Such fibres with a low index ring 131 may be referred to as double clad fibres. Double clad fibres can be preferred when strong tapering is used because the low index ring 131 may help to contain the fundamental mode, or higher order modes, as the mode expands from the core along the taper.

Individual first and second feed fibres 1, 2 can be acid etched to reduce their cladding diameters 210, 212 prior to tapering. Reducing the cladding diameters 210, 212 can increase the brightness of the laser radiation emitted from the fibre bundle 4. A suitable acid is hydrofluoric acid.

Referring to Figures 1, 3, 8 and 23, the multicore fibres 10, 80 and 230 can have a core diameter 301 of the first core 11 of between 15 to 200 µm. Referring to Figures 1, 3 and 8, the multicore fibres 10 and 80 can have an inner diameter 302 of the second core 12 of between 30 to 220 µm, and an outer diameter 303 of the second core 12 of between 45 to 400 µm. The inner cladding 310 may have a width 304 as shown in Figure 3. The width 304 is the difference between the inner diameter 302 and the core diameter 301. The width 304 is preferably in the range 10 µm to 25 µm. The first core 11 may have a numerical aperture in the range 0.08 to 0.24. The second core 12 may have a numerical aperture in the range 0.12 to 0.24. The glass body 311 may have a numerical aperture with respect to the outer cladding 312 in the range 0.1 to 0.48, and preferably 0.2 to 0.48. The numerical aperture of a dielectric waveguide that has a core having a refractive index n₁ and a cladding having a refractive index n₂ is defined by √( n₁² - n₂² ). The numerical aperture is related to the acceptance angle of the dielectric waveguide, and to the angle of total internal reflection for rays that propagate along the waveguide. Increasing the numerical aperture increases the acceptance angle of the waveguide as well as the maximum angle that optical rays propagating along the waveguide experience total internal reflection. The multicore fibres 10, 80 may also be coated with a coating (not shown) that has a lower refractive index than the glass body 311 of the multicore fibre.

The first feed fibre or fibres 1 and the second feed fibre or fibres 2 can have circular, square, or rectangular cores and claddings. The multicore fibre 10 can have circular, square, or rectangular cores and claddings. Other shapes are also possible.

The apparatus shown in Figure 25 has a fibre bundle 251 which has an input face 258 at its larger diameter end which has an angle θ 257 with respect to its longitudinal axis. An angle 257 of between 35 to 55 degrees ensures that optical radiation reflected back along the fibre bundle 251 is reflected out of the fibre bundle 251 by total internal reflection. The angle 257 is preferably 45 degrees. The fibre bundles 200, 60, 70, 100, 130, 140, 160, 180, 2000, or 220 described with reference to Figures 2, 6, 7, 10, 13, 14, 16, 18, 20 and 22 respectively can also have the angle 257.

The fibre bundle 251 is shown as having two first feed fibres 1, two second feed fibres 2, and three spacing fibres 141 arranged in a hexagonal formation. The fibres are tapered down, and spliced to the multicore fibre 10 with an offset splice 252 such that the first feed fibres 1 are coupled to the first core 11, and the second feed fibres 2 are coupled to the second core 12 of the multicore fibre 10. The alignment of the first and second feed fibres 1, 2 with the first core 11 and the second core 12 of the multicore fibre 10 at the splice 252 is shown by the dashed lines in the right inset of Figure 25. As described with reference to Figure 14, the use of the spacing fibres 141 enables the production of separate / non-adjacent first and second feed fibres 1, 2 without the need to introduce an inner capillary to the bundle assembly.

The fibre bundle 251 is an example of a fibre bundle that comprises at least one first feed fibre 1, at least two second feed fibres 2, and at least three spacing fibres 141 arranged in a formation. One of the spacing fibres 141 may be at the centre of the formation. This formation enables the first feed fibre or fibres 1 to be coupled to the first core 11 of the multicore fibre 10, and the second feed fibres 2 to be coupled to the second core 12 of the multicore fibre 10. Two, three, four or more second feed fibres 2 can be provided in this arrangement enabling the optical power emitted by the apparatus to be scaled. The central spacing fibre 141 may have a larger diameter than the other fibres in the formation.

The use of spacing fibres 141 to separate at least one first feed fibre 1 which is coupled only to the first core 11 and at least one second feed fibre 2 which is coupled to the second core 12 provides advantages in assembling the fibre bundle 251. For example, the fibre bundle 251 may have only one first feed fibre 1 aligned with the centre of a first core 11, and three second fibres 2 aligned with the second core 12, as shown in Figure 26. Three spacing fibres 141 separate the first feed fibre 1 from the second feed fibres 2.

Figure 25 shows the fibre bundle 251 mounted on a substrate 256 which acts as a heat sink to remove heat energy caused by optical losses in the splices. Advantageously, the substrate 256 preferably has a high thermal conductivity in order to spread and remove heat such that temperature rises do not damage the fibres' coatings, coupled with a low thermal expansion to reduce stresses being applied to the fibre bundle 251. The thermal conductivity is preferably greater than 100 ppm/ °C, and more preferably greater than 200 ppm/ °C. The thermal expansion is preferably less than 5 x 10⁻⁶ / °C, and more preferably less than 3 x 10⁻⁶ / °C. Suitable materials for the heat sink include copper tungsten. It is also advantageous to use a relatively soft material to secure the fibre bundle 251 to the substrate 256 as this reduces the force transferred to the combiner when the package expands and contracts. A silicone material (not shown) can be used for example. The fibre bundles 200, 60, 70, 100, 130, 140, 160, 180, 2000, or 220 described with reference to Figures 2, 6, 7, 10, 13, 14, 16, 18, 20 and 22 respectively can be mounted on the substrate 256.

The multicore fibre 10 is shown spliced to an optional beam delivery fibre 254 at splice 2510 for transmitting laser radiation to the material 29 shown with reference to Figure 1. The beam delivery fibre 254 preferably has the same optical design as the multicore fibre 10. More preferably, the second core 12 of the beam delivery fibre may have a 1µm to 10µm larger diameter than the second core 12 of the multicore optical fibre 10 in order to reduce splice losses. When transmitting optical powers exceeding 1kW over distances greater than 5m, it can be preferable that the beam delivery fibre 254 has as large a diameter as possible, whilst preserving beam quality. Increasing the diameter can reduce wavelength conversion and other undesirable optical effects caused by non-linear processes such as stimulated Raman scattering, and thus enable high optical powers to be transmitted over longer distances. The beam delivery fibre 254 can be tapered at its output end with the taper 255. This can be advantageous for tailoring the output beam divergence and spot size of laser radiation so that it matches the beam requirements of processing optics such as cutting heads or welding heads. The beam delivery fibre 254 preferably has a strong outer jacket that is resistant to abrasion and chemicals, metal screening to resist being punctured, and may include part of an optional break detection system for shutting down the laser in the event of damage.

The multicore fibre 10 interfaces the fibre bundle 251 to the beam delivery fibre 254. This may entail providing a taper 253 to reduce the diameters 301, 302 and 303 of the multicore fibre 10 shown with reference to Figure 3 such that the at least one first feed fibre 1 aligns with and therefore couples laser radiation only to the first core 11, and the at least one second feed fibre 2 aligns with and therefore couples laser radiation only to the second core 12 of the multicore fibre 10. Connecting the fibre bundle 251 to the beam delivery fibre 254 with the multicore fibre 10 has advantages in manufacturing because it enables beam delivery fibres 254 having different core diameters to be interfaced to the fibre bundle 251 by changing the design of the taper 253. It also enables beam delivery fibres 254 to be exchanged more reliably if they become damaged during operation. The splice 2510 can be located in the same housing or container as the fibre bundle 251, or alternatively, located in a separate housing 259. Beam delivery fibres 254 can be repaired or replaced more easily if the splice 2510 is in the separate housing 259.

The apparatus shown in Figure 25 may include a mode converter 2511 for coupling optical modes together that are propagating in at least one of first core 11 or the second core 12 of the optical fibre 10 and/or the beam delivery fibre 254.

The mode converter 2511 may comprise a squeezing mechanism, for example the squeezing mechanism 270 shown in Figure 27. The squeezing mechanism 270 comprises a first periodic surface 271 and a second periodic surface 272 that are arranged out of phase, such that the optical fibre 10 is bent periodically along its length with a pitch 277. The pitch 277 can be uniform, or chirped as shown. The chirp can be monotonic or non-monotonic. A squeezing force may be applied by an actuator 275 to squeeze the optical fibre 10 between the first and the second periodic surfaces 271, 272.

The mode converter 2511 may comprise the squeezing mechanism 280 shown in Figure 28, comprising three parts 285 that each have two periodic surfaces 281 and 282 shown with reference to Figures 28 and 29. The parts 285 are arranged at 120 degrees with respect to each other. The periodic surfaces 281 and 282 are spatially 120 degrees out of phase with each other along their length, and thus the optical fibre 10 is deformed in a substantially helical manner when the periodic surfaces are squeezed together. The squeezing force can be applied by the actuator 275.

Optical modes can be coupled together if the pitch 27 is equal to 2π/( β_{A} - β_{B}), where β_{A} and β_{B} are propagation constants of the optical modes being coupled together. In an experiment, it was found that if the pitch 277 is chirped from at least 7.5 mm at its input end (the end nearest the fibre bundle 251), to no more than 2.9 mm at its output end (the end furthest away from the fibre bundle 251), then it is possible to couple individual optical linearly-polarized LP_{p,q} modes of the first core 11 together in ascending mode order by increasing the squeezing force applied to the multicore fibre 10 using either the squeezing mechanism 270 or the squeezing mechanism 280. Thus if the LP_{0,1} mode shown in Figure 30, which has a single high intensity spot 320, is input into the mode converter 2511, then it is possible to obtain the single higher-order modes of the first core 11 shown in Figures 31 - 35, either singly or in combination. In ascending mode order, the LP_{1,1} mode of Figure 31 has two high-intensity spots 321, the LP_{2,1} mode of Figure 32 has four high-intensity spots 322, the LP_{3,1} mode of Figure 33 has six high-intensity spots 323, the LP_{4,1} mode of Figure 34 has eight high-intensity spots 324, and the LP_{5,1} mode of Figure 35 has ten high-intensity spots 325. The absolute values and ranges of the pitch 277 is dependent upon the design of the optical fibre 10. The pitch 277 is preferably selected in dependence upon the design of the optical fibre 10 and the numbers of optical modes that it is desired to couple to and can be found by experimentation.

The mode converter 2511 can be used to increase the beam parameter product of optical radiation propagating in the first core 11 of the multicore fibre 10, including producing a flat-topped profile. This can be achieved either by launching a plurality of optical modes of the first core 11 using more than one first feed fibre 1, and/or by launching at least one optical mode of the first core 11, and in each case, increasing the squeezing force being applied by the squeezing mechanism 270 or 280. The pitch 277 is preferably chirped along the length of the squeezing mechanism 270 or 280. The pitch 277 at the input end nearest the fibre bundle 251 is preferably longer than the pitch 277 at the output end further away from the fibre bundle 251.

The mode converter 2511 can also be used to increase the beam parameter product of optical radiation propagating in the second core 12 of the multicore fibre 10, including producing a flat topped profile. This can be achieved by increasing the squeezing force being applied by the squeezing mechanism 270 or 280. The pitch 277 is preferably chirped along the length of the squeezing mechanism 270 or 280.

As also shown in Figure 1, the apparatus of the present invention may include a control unit 28 connected to the first laser 15, or at least one of the first lasers 15 if a plurality of the first lasers 15 is employed. Alternatively or additionally, the control unit 28 may be connected to the second laser 16, or at least one of the second lasers 16 if a plurality of the second lasers 16 is employed. The control unit 28 may comprise electronic circuits and a computer or microprocessor / microcontroller and may send control signals to the first laser 15 and the second laser 16 to control their output powers or switch them on and off and thus control the intensities of the first image 34, the second image 35, and the third image 36. The control unit 28 may send a control signal to the optical switch 20 to control the switching of the first laser radiation 18 between the first feed fibre 1 and the second feed fibre 2. The control unit 28 may send a control signal to the mode converters 17 to control the coupling of a fundamental mode to higher order modes of the first and the second feed fibres 1, 2. The control unit 28 may send control signals to the processing head 8 in order to control the flow of assist or process gases. Such gases may be used in cutting and welding metals. The control unit 28 may be configured to control the first laser or lasers 15, the second laser or lasers 16, the mode converters 17 (if provided), the optical switch 20 (if provided), and the processing head 8 to select one or more of the first image 34, the second image 35, and the third image 36 in dependence on the laser processing that is being performed on the material 29. The relative optical powers in the first image 34, the second image 35 and the third image 36 may be varied or turned on and off as indicated by the double-headed arrows in Figure 1. The control unit may comprise more than one control units.

As described with reference to Figure 3, the optical fibre 10 may include a glass body 311 surrounding the second core 12 that has a lower refractive index than the refractive index of the second core 12. The glass body 311 may be surrounded by a cladding 313 that has a lower refractive index than the refractive index of the glass body 311. As described with reference to Figure 1, the mode converter 17 can switch the laser radiation emitted by the multicore fibre 10 from the first beam 31 and/or the second beam 32 to the third beam 33 by coupling to one or more of the higher order modes of the first feed fibre 1 and/or the second feed fibre 2. The minimum taper diameter 2512 of the fibre bundle 251 may be located before the splice 252. This allows the numerical aperture of the third beam 33 to be reduced before the optical radiation enters into the multicore fibre 10. Preferably, the minimum taper diameter 2512 and its relative position with respect to the splice 252, and the first and second feed fibres 1, 2 and the output fibre 10, are such that the first beam 31, the second beam 32 and the third beam 33 are within the acceptance angle of the processing optics shown in Figure 1. The minimum taper diameter 2512 and its relative position can be found by experimentation.

A method of using the apparatus of the invention may be to provide the apparatus of the invention and to switch between the first image 34, the second image 35 and the third image 36 in dependence of the laser processing to be performed on the material 29. The method may be such that it comprises one or more method steps for providing the optional component parts of the apparatus.

As also shown in Figure 1, the apparatus may include an optical analyser 25 connected to an input 5 of the optical combiner 3. As shown in Figure 1, optical radiation 26 that is reflected or emitted from the material 29 can be analysed by the optical analyser 25 and the results input into the control unit 28. The optical analyser 25 may alternatively or additionally be connected to the mode stripper 24 or the mode stripper 29. The optical analyser 25 may comprise an optical detector and an optical and/or electronic filter. The optical analyser 25 enables optical radiation that is reflected or emitted from the material 29 to be analysed in order to control the laser processing of the material 29. The optical analyser 25 can be used to detect when the material 29 has been pierced, to monitor cutting speeds during thin, thick and variable thickness cutting, to monitor welding and brazing quality, and to monitor the quality of sintered layers of metal powders in additive manufacturing applications. The optical analyser 25 may be output into the control unit 28. When the optical analyser 25 is used to detect when the material 29 has been pierced, the control unit 28 can adjust the optical intensities in the first and second beams 31, 32 from a high brightness beam suitable for piercing to a lower brightness beam suitable for cutting. The optical analyser 25 is shown connected to a second feed fibre 2. Alternatively or additionally, the optical analyser 25 can be connected to a first feed fibre 1, or to a spacing fibre 141 such as shown with respect to Figure 14.

Referring to Figure 1, the apparatus of the invention can be used to form the first image 34 by turning the at least one first laser 15 on. The first image 34 can be modified using the mode converter 17 acting on the first laser radiation 18 and/or the mode converter 2511 to increase the beam parameter product of the first beam 31. The mode converter 17 can switch between a first image 34 comprising a fundamental mode 320 and a first image 34 comprising one or more higher order annular core modes 321 - 325.

The first beam 31 is particularly useful for piercing metal and for micromachining.

The apparatus of the invention can be used to form the second image 35 by turning the at least one second laser 16 on. The second image 35 can be modified using the mode converter 17 acting on the second laser radiation 19 and/or the mode converter 2511 to increase the beam parameter product of the second beam 32 and/or to homogenize the second image 35. The second image 35 can be increased in intensity by coupling the first laser radiation 18 to the second feed fibre 2 using the optical switch 20.

The second beam 31 is particularly useful for cutting and welding.

The apparatus of the invention can be used to form the third image 36 by turning the first laser 15 and/or the second laser 16 on, and operating at least one of the mode converters 17 to couple the first and/or second laser radiation 18, 19 to unguided optical modes of the first and second feed fibres 1, 2 when tapered in the fibre bundle 4. The third image 36 can be modified using the mode converter 17 acting on the first or second laser radiation 18, 19 and/or the mode converter 2511 to increase the beam parameter product of the third beam 33 and/or to homogenize the third image 36.

The apparatus of the invention can deliver a number of distinct energy distributions that are advantageous for material processing applications. These applications include laser metal cutting, welding, selective laser melting and additive manufacturing.

Referring to Figure 1, the at least one first laser 15 and the at least one second laser 16 can be operated independently of each other.

The apparatus of the invention can be switched between a high brightness source ideal for cutting of highly reflective materials, piercing and drilling to a large area annular beam ideal for cutting of thick section mild steel.

The apparatus of the invention can provide spatter-free welding of reflective materials and coated materials. The outer annular beam from the second core 12 acts to preheat the material, and one or more the high order ring beam generated in the core precisely controls the melt pool formed.

The apparatus of the invention provides distinct advantages for powder bed additive manufacturing. Fusion of the metallic powder requires precise energy control that prevents defects and pores that might otherwise compromise the structural integrity of the part. Single lasers can operate in only one regime with either the processing rate or feature size compromised. The apparatus of the invention can be switched between the first image 34 comprising either a single mode for high precision and/or one or more higher order annular core modes for medium precision, the second image 35 comprising an annular beam ideal for fusing the material at a high rate with low defects, and the third image 36 comprising a larger beam that is also ideal for fusing the material at a high rate with low defects. Uniquely the source can be switched between these operational regimes to optimize productivity and quality.

It is to be appreciated that the embodiments of the invention described above with reference to the accompanying drawings have been given by way of example only and that modifications and additional steps and components may be provided to enhance performance. Individual components shown in the drawings are not limited to use in their drawings and particular embodiments, and may be used interchangeably in other embodiments and in all aspects of the invention. The present invention extends to any of the above mentioned features taken singly or in any combination.

Some non-limiting aspects of the invention are disclosed in the following clauses:

### Clauses

1. Apparatus for laser processing a material (29), which apparatus comprises at least one first laser (15), at least one second laser (16), an optical combiner (3), and a multicore fibre (10), wherein:
   - each first laser (15) is connected to the optical combiner (3) via a first feed fibre (1);
   - each second laser (16) is connected to the optical combiner (3) via a second feed fibre (2);
   - the optical combiner (3) connects the first feed fibre (1) to a first core (11) of the multicore fibre (10), and the second feed fibre (2) to a second core (12) of the multicore fibre (10);
   - the optical combiner (3) provides a first optical path (41) from the first laser (15) to the first core (11) of the multicore fibre (10);
   - the optical combiner (3) provides a second optical path (42) from the second laser (16) to the second core (12) of the multicore fibre (10); and
   - the optical combiner (3) comprises a fibre bundle (4) that is tapered along its length.
2. Apparatus according to clause 1 and comprising at least one spacing fibre (141),
   wherein the or a first feed fibre (1) is separated from the or a second feed fibre (2) by the or a spacing fibre (141).
3. Apparatus according to clause 2 wherein the first feed fibre (1), the second feed fibre (2) and the spacing fibre (141) are arranged in a formation, and the first feed fibre (1) is offset from the centre of the formation.
4. Apparatus according to clause 3 wherein the formation is a square or a triangular or a hexagonal formation.
5. Apparatus according to clause 3 wherein the fibre bundle 4 comprises two first feed fibres (1), two second feed fibres (2), and three spacing fibres (141), and the first feed fibres (1), the second feed fibres (2) and the spacing fibres (141) are arranged in a hexagonal formation.
6. Apparatus according to clause 3 wherein the fibre bundle (4) comprises at least one first feed fibre (1), at least two second feed fibres (2), and at least three spacing fibres (141) arranged in a formation.
7. Apparatus according to clause 3 wherein the fibre bundle 4 comprises one first feed fibre (1), three second feed fibres (2), and two spacing fibres (141), and the first feed fibre (1), the second feed fibres (2) and the spacing fibres (141) are arranged in a hexagonal formation.
8. Apparatus according to clause 2 wherein the first feed fibre (1) and the second feed fibre (2) are arranged in a square formation which comprises the first feed fibre (1), the second feed fibre (2) and two of the spacing fibres (141), and wherein the first feed fibre (1) and the second feed fibre (2) are diagonally opposite each other.
9. Apparatus according to clause 1 wherein the fibre bundle (4) comprises a plurality of the first feed fibres (1).
10. Apparatus according to clause 1 wherein the fibre bundle (4) comprises a low index ring (131) adjacent to a cladding (206) of the first feed fibre (1), wherein the low index ring (131) has a refractive index less than a refractive index of the cladding (206).
11. Apparatus according to clause 10 wherein the low index ring (131) is a cladding of the first feed fibre (1) that surrounds the cladding (206).
12. Apparatus according to clause 1 wherein the fibre bundle (4) comprises an inner capillary (202).
13. Apparatus according to clause 12 wherein the inner capillary (202) comprises at least one groove (51).
14. Apparatus according to clause 1 wherein the fibre bundle (4) comprises the first feed fibre (1) and at least one of the second feed fibres (2), wherein the first feed fibre (1) and the second feed fibre (2) are located in a capillary (201), and wherein the first feed fibre (1) is against a wall of a bore (181) of the capillary (201).
15. Apparatus according to clause 14 wherein the bore (181) is offset from a central axis of the capillary (201) such that the first feed fibre (1) is aligned to the central axis of the capillary (2001).
16. Apparatus according to clause 1 wherein the fibre bundle (4) comprises an outer capillary (201) surrounding the at least one second feed fibre (2).
17. Apparatus according to clause 16 wherein the outer capillary (201) is a square capillary (161)
18. Apparatus according to clause 1 wherein the first laser (15) comprises a single mode laser.
19. Apparatus according to clause 18 wherein the first feed fibre (1) is a multimode fibre, the first laser (15) comprises an output fibre (38), and the output fibre (38) and the first feed fibre (1) are fusion spliced together with a splice (37) such that a fundamental mode propagating in the output fibre (38) is coupled to a fundamental mode propagating in the first feed fibre (1).
20. Apparatus according to clause 1 wherein the first feed fibre (1) is tapered such that a core diameter (209) of the first feed fibre (1) at an output (6) of the optical combiner (3) is less than a critical diameter (243) at which a mode field diameter (241) of a fundamental mode of the first feed fibre (1) reaches a minimum mode field diameter (242).
21. Apparatus according to clause 1 wherein the first feed fibre (1) is a double clad fibre.
22. Apparatus according to clause 1 wherein the second laser (16) comprises a single mode laser.
23. Apparatus according to clause 22 wherein the second feed fibre (2) is a multimode fibre, wherein the second laser (16) comprises an output fibre (38), and wherein the output fibre (38) and the second feed fibre (2) are fusion spliced together with a splice (37) such that a fundamental mode propagating in the output fibre (38) is coupled to a fundamental mode propagating in the second feed fibre (2).
24. Apparatus according to clause 23 wherein the second feed fibre (2) is tapered such that a core diameter (211) of the second feed fibre (2) at an output (6) of the optical combiner (3) is less than a critical diameter (243) at which a mode field diameter (241) of a fundamental mode of the second feed fibre (2) reaches a minimum mode field diameter (242).
25. Apparatus according to clause 24 wherein the second feed fibre (2) is tapered such that a core diameter (211) of the second feed fibre (2) at an output (6) of the optical combiner (3) is greater than a critical diameter (243) at which a mode field diameter (241) of a fundamental mode of the second feed fibre (2) reaches a minimum mode field diameter (242).
26. Apparatus according to clause 1 wherein the second feed fibre (2) is a double clad fibre.
27. Apparatus according to any one of the preceding clauses and including a cladding mode stripper (24) on the first feed fibre (1) and the second feed fibre (2).
28. Apparatus according to clause 1 and including a cladding mode stripper (24) on the multicore fibre (10).
29. Apparatus according to clause 1 wherein the fibre bundle (4) has an input face (258) at its larger diameter end which has an angle (257) with respect to its longitudinal axis of between 35 and 55 degrees.
30. Apparatus according to clause 1 and including a collimator (7) at a distal end (13) of the multicore fibre (10), and wherein the collimator (7) is connected to a laser processing head (8) that comprises a focussing lens (9).
31. Apparatus according to clause 1 and including a control unit (28) connected to the first laser (15) and to the second laser (16) to control a power of laser radiation emitted by the first laser (15) and the second laser (16), and thereby independently control a power of laser radiation propagating along the first optical path (41) to the first core (11) of the multicore fibre (10), and a power of laser radiation propagating along the second optical path (41) to the second core (12) of the multicore fibre (10).
32. Apparatus according to clause 31 wherein the control unit (28) is connected to a mode converter (17) to control the beam quality of the laser radiation propagating along the first or second optical path (41) (42) and thereby control the beam quality of laser radiation emitted from the multicore fibre (10).
33. Apparatus according to clause 1 wherein the first laser (15) or at least one of the first lasers (15) if a plurality of the first lasers (15) is employed is connected to a mode converter (17).
34. Apparatus according to clause 33 wherein the mode converter (17) is such that an LP_{0,1} mode guided by the first feed fibre (1) is coupled to one or more LP_{p,1} optical modes of the first feed fibre (1).
35. Apparatus according to clause 1 and comprising a mode converter (2511) which acts on the multicore fibre (10).
36. Apparatus according to clause 35 wherein the first core (11) of the multicore fibre (10) is such that it can guide an LP_{p,1} mode thereby allowing the modal content of a first beam (31) emitted by the first core (11) to be selected in dependence on the laser processing that is being performed on the material (29).
37. Apparatus according to clause 1 wherein the second laser (16) or at least one of the second lasers (16) if a plurality of the second lasers (16) is employed is connected to a mode converter (17).
38. Apparatus according to clause 37 wherein the mode converter (17) is such that an LP_{0,1} mode guided by the second fibre (2) is coupled to one or more LP_{p,1} optical modes of the second feed fibre (2).
39. Apparatus according to clause 38 wherein the LP_{p,1} mode is not guided by the second feed fibre (2) at a minimum taper diameter (2512) of the fibre bundle (251).
40. Apparatus according to clause 39 wherein the minimum taper diameter (2512) is located before the splice (252) between the fibre bundle (251) and the multicore fibre (10).
41. Apparatus according to clause 1 in which the multicore fibre (10) has a taper (253) to interface to the fibre bundle (4).
42. Apparatus according to clause 1 and including an optical analyser (25) connected to an input (5) of the optical combiner (3), which optical analyser (25) enables optical radiation that is reflected or emitted from the material (29) to be analysed in order to control the laser processing of the material (29).
43. Apparatus according to clause 1 comprising a plurality of the second feed fibres (2), and including an optical switch (20) having an input (21) connected to the at least one first laser (15), a first output (22) for the first feed fibre (1), and a second output (23) for at least one of the second feed fibres (2), thus enabling first laser radiation (18) emitted by the at least one first laser (15) to be coupled into either or both the first feed fibre (1) and the said at least one second feed fibre (2).
44. Apparatus according to clause 43 wherein the optical switch (20) is between the at least one first laser (15) and the optical combiner (3).
45. Apparatus according to clause 1 in which optical radiation can be switched between a first image (34) comprising a fundamental mode (320), a first image (34) comprising one or more higher order annular core modes (321 - 325), a second image (35) comprising an annular beam, and a third image (36) comprising a solid beam in dependence on the laser processing that is being performed on the material (29).
46. A method comprising providing apparatus for laser processing a material, which apparatus comprises at least one first laser, at least one second laser, an optical combiner, and a multicore fibre, wherein:
   - each first laser is connected to the optical combiner via a first feed fibre;
   - each second laser is connected to the optical combiner via a second feed fibre;
   - the optical combiner connects the first feed fibre to a first core of the multicore fibre, and the second feed fibre to a second core of the multicore fibre;
   - the optical combiner provides a first optical path from the first laser to the first core of the multicore fibre;
   - the optical combiner provides a second optical path from the second laser to the second core of the multicore fibre; and
   - the optical combiner comprises a fibre bundle that is tapered along its length;
   and controlling the power and beam quality of at least one of a first beam, a second beam and a third beam emitted from the multicore fibre in dependence of the laser processing to be performed on the material.

## Claims

1. Apparatus for laser processing a material (29), which apparatus comprises at least one first laser (15), at least one second laser (16), an optical combiner (3), and a multicore fibre (10), wherein:
• each first laser (15) is connected to the optical combiner (3) via a first feed fibre (1);
• each second laser (16) is connected to the optical combiner (3) via a second feed fibre (2);
• the optical combiner (3) connects the first feed fibre (1) to a first core (11) of the multicore fibre (10), and the second feed fibre (2) to a second core (12) of the multicore fibre (10);
• the optical combiner (3) provides a first optical path (41) from the first laser (15) to the first core (11) of the multicore fibre (10);
• the optical combiner (3) provides a second optical path (42) from the second laser (16) to the second core (12) of the multicore fibre (10); and
• the optical combiner (3) comprises a fibre bundle (4) that is tapered along its length;.
and the apparatus comprising at least one spacing fibre (141), wherein the or a first feed fibre (1) is separated from the or a second feed fibre (2) by the or a spacing fibre (141); and,
wherein the first feed fibre (1), the second feed fibre (2) and the spacing fibre (141) are arranged in a formation, and the first feed fibre (1) is offset from the centre of the formation.

2. Apparatus according to claim 1 wherein the fibre bundle (4) comprises at least one first feed fibre (1), at least two second feed fibres (2), and at least three spacing fibres (141) arranged in a formation.

3. Apparatus according to claim 1 or 2 wherein the fibre bundle 4 comprises two first feed fibres (1), two second feed fibres (2), and three spacing fibres (141), and the first feed fibres (1), the second feed fibres (2) and the spacing fibres (141) are arranged in a hexagonal formation.

4. Apparatus as claimed in claim 3 wherein the first and second feed fibres are spliced to the multicore fibre (10) with an offset splice such that the first feed fibres (1) are coupled to the first core (111) and the second feed fibres (2) are coupled to the second core (12).

5. Apparatus according to any preceding claim wherein the formation is a square or a triangular or a hexagonal formation.

6. Apparatus according to claim 1 wherein the fibre bundle 4 comprises one first feed fibre (1), three second feed fibres (2), and two spacing fibres (141), and the first feed fibre (1), the second feed fibres (2) and the spacing fibres (141) are arranged in a hexagonal formation.

7. Apparatus according to any preceding claim wherein the fibre bundle (4) comprises the first feed fibre (1) and at least one of the second feed fibres (2), wherein the first feed fibre (1) and the second feed fibre (2) are located in a capillary (201), and wherein the first feed fibre (1) is against a wall of a bore (181) of the capillary (201).

8. Apparatus according to 7 wherein the bore (181) is offset from a central axis of the capillary (201) such that the first feed fibre (1) is aligned to the central axis of the capillary (2001).

9. Apparatus according to claim 1 wherein the fibre bundle (4) comprises an outer capillary (201) surrounding the at least one second feed fibre (2).

10. Apparatus according to any preceding claim wherein the first laser (15) or second laser (16) comprises a single mode laser.

11. Apparatus according to claim 10 wherein the first feed fibre (1) or second feed fibre (2) is a multimode fibre, the first laser (15) or second laser (16) comprises an output fibre (38), and the output fibre (38) and the first feed fibre (1) or second feed fibre (2) are fusion spliced together with a splice (37) such that a fundamental mode propagating in the output fibre (38) is coupled to a fundamental mode propagating in the first feed fibre (1), or second feed fibre (16).

12. Apparatus according to claim 1 wherein the first feed fibre (1) or the second feed fibre (2) is tapered such that a core diameter (209) of the first feed fibre (1), or a core diameter (222) of the second feed fibre (2) at an output (6) of the optical combiner (3) is less than a critical diameter (243) at which a mode field diameter (241) of a fundamental mode of the first feed fibre (1) reaches a minimum mode field diameter (242).

13. Apparatus according to claim 1 wherein the fibre bundle (4) has an input face (258) at its larger diameter end which has an angle (257) with respect to its longitudinal axis of between 35 and 55 degrees.

14. Apparatus according to claim 1 and including a control unit (28) connected to the first laser (15) and to the second laser (16) to control a power of laser radiation emitted by the first laser (15) and the second laser (16), and thereby independently control a power of laser radiation propagating along the first optical path (41) to the first core (11) of the multicore fibre (10), and a power of laser radiation propagating along the second optical path (41) to the second core (12) of the multicore fibre (10); the control unit (28) being optionally connected to a mode converter (17) to control the beam quality of the laser radiation propagating along the first or second optical path (41) (42) and thereby control the beam quality of laser radiation emitted from the multicore fibre (10).

15. Apparatus according to any preceding claim wherein the first core (11) of the multicore fibre (10) is such that it can guide an LP_{p,1} mode thereby allowing the modal content of a first beam (31) emitted by the first core (11) to be selected in dependence on the laser processing that is being performed on the material (29).

16. Apparatus according to any preceding claim and including an optical analyser (25) connected to an input (5) of the optical combiner (3), which optical analyser (25) enables optical radiation that is reflected or emitted from the material (29) to be analysed in order to control the laser processing of the material (29).

17. Apparatus according to any preceding claim in which optical radiation can be switched between a first image (34) comprising a fundamental mode (320), a first image (34) comprising one or more higher order annular core modes (321 - 325), a second image (35) comprising an annular beam, and a third image (36) comprising a solid beam in dependence on the laser processing that is being performed on the material (29).

18. A method comprising providing apparatus for laser processing a material, which apparatus comprises at least one first laser, at least one second laser, an optical combiner, and a multicore fibre, wherein:
• each first laser is connected to the optical combiner via a first feed fibre;
• each second laser is connected to the optical combiner via a second feed fibre;
• the optical combiner connects the first feed fibre to a first core of the multicore fibre, and the second feed fibre to a second core of the multicore fibre;
• the optical combiner provides a first optical path from the first laser to the first core of the multicore fibre;
• the optical combiner provides a second optical path from the second laser to the second core of the multicore fibre; and
• the optical combiner comprises a fibre bundle that is tapered along its length;
and controlling the power and beam quality of at least one of a first beam, a second beam and a third beam emitted from the multicore fibre in dependence of the laser processing to be performed on the material;
providing at least one spacing fibre (141), wherein the or a first feed fibre (1) is separated from the or a second feed fibre (2) by the or a spacing fibre (141); and,
wherein the first feed fibre (1), the second feed fibre (2) and the spacing fibre (141) are arranged in a formation, and the first feed fibre (1) is offset from the centre of the formation.
